Europäisches Patentamt

(19) European Patent Office

Office européen des brevets

(11) Publication number: **0 130 822**
**B1**

# (12) EUROPEAN PATENT SPECIFICATION

(45) Date of publication of patent specification: **30.09.87**

(51) Int. Cl.⁴: **A 23 L 1/237**

(21) Application number: **84304485.0**

(22) Date of filing: **29.06.84**

(54) **Salt substitute blends of potassium chloride and maltodextrin and method of preparation.**

(30) Priority: **30.06.83 US 509845**
**30.06.83 US 509849**
**30.06.83 US 509847**

(43) Date of publication of application:
**09.01.85 Bulletin 85/02**

(45) Publication of the grant of the patent:
**30.09.87 Bulletin 87/40**

(84) Designated Contracting States:
**AT BE CH DE FR GB IT LI LU NL SE**

(56) References cited:
**US-A-3 514 296**
**US-A-3 663 369**
**US-A-3 860 732**

(73) Proprietor: **Mallinckrodt, Inc. (a Delaware corporation)**
**675 McDonnell Boulevard P.O. Box 5840**
**St. Louis Missouri 63134 (US)**

(72) Inventor: **Meyer, David Robert**
**13524 Coliseum Drive**
**Chesterfield Missouri 63017 (US)**

(74) Representative: **Eyles, Christopher Thomas et al**
**BATCHELLOR, KIRK & EYLES 2 Pear Tree Court**
**Farringdon Road**
**London, EC1R 0DS (GB)**

# 0 130 822

**Description**

The present invention relates to a blend composition useful as a substitute for salt.

There are a number of salt substitute compositions which are described in the literature and/or are available commercially containing potassium chloride with and without sodium chloride. Such compositions have been proposed for people who seek to eliminate or minimise the amount of sodium chloride in their diet due to medical necessity or for other reasons. Amongst such prior art proposals is US—A—3860732, whose Example 4 discloses a sodium-free salt substitute which is a mixture of dextrose (16.6% by weight), KCl (83.1% by weight) and cream of tartar (0.3% by weight). US—A—3514296 teaches a culinary seasoning salt composition which consists essentially of about 20 to about 80 wt% KCl and about 80 to about 20 wt% NaCl. Another prior art proposal is EP—A—0059363 whose Examples 10 and 14 teach mixtures containing potassium chloride, potassium glutamate, glutamic acid, small amounts of nucleotides and at least 10 wt% starch sugar (i.e. dextrose).

The heretofore known salt substitutes have not, however, been entirely satisfactory from the standpoints of similarity to common salt (i.e. sodium chloride) in taste and appearance. Accordingly, there is a substantial need in the art for an improved salt substitute composition.

In our copending European Application No. 84304484.3 filed concurrently herewith (now EP—A—0130821), there is described a salt substitute composition which comprises coated particles, each particle comprising:

(a) a core comprising potassium chloride and

(b) a coating on the core, the coating comprising maltodextrin,

wherein the dextrose equivalent (D.E.) of the combined core and coating is not more then 10 D.E. units.

It has now been found unexpectedly that an effective salt substitute can be prepared in simple and efficient manner by admixing potassium chloride and maltodextrin. If desired, sodium chloride or cream of tartar, or a mixture thereof, may additionally be included in such salt substitutes. Admixtures resulting from such admixing have unexpectedly been found to be effective salt-substitute compositions which at least closely approach the taste and appearance of salt and substantially fulfill the above-mentioned need.

Generally stated, the present invention provides a salt-substitute composition which comprises particles of potassium chloride and particles of a saccharide material in uniform admixture and which has a content of dextrose characterised in that the saccharide material is maltodextrin and the dextrose equivalent (D.E.) of the admixture is not more than 10 D.E. units.

According to a preferred aspect of the invention there is provided a salt-substitute blend composition which comprises a uniform admixture consisting essentially of:

(a) potassium chloride and

(b) maltodextrin,

wherein the dextrose equivalent (D.E.) of the combined amount of potassium chloride and maltodextrin is not more than 10 D.E. units.

The invention further provides a salt-substitute blend composition which comprises a uniform admixture comprising:

(a) potassium chloride

(b) maltodextrin and

(c) sodium chloride,

wherein the dextrose equivalent (D.E.) of the combined amount of potassium chloride, maltodextrin and sodium chloride is not more than 10 D.E. units.

In a preferred embodiment, the above salt substitute composition further includes, in addition to the specified components (a), (b) and (c), cream of tartar. In this embodiment, the D.E. of the combined amount of potassium chloride, maltodextrin, sodium chloride and cream of tartar is preferably not more than 10 D.E. units.

In another of its aspects the invention provides a salt-substitute blend composition which comprises a uniform admixture comprising:

(a) potassium chloride,

(b) maltodextrin and

(c) cream of tartar,

and being free of sodium chloride, wherein the dextrose equivalent (D.E.) of the combined amount of potassium chloride, maltodextrin and cream of tartar is not more than 10 D.E. units.

As used herein with reference to a material, the terms "dextrose equivalent" and "D.E." mean the total amount of reducing sugars (calculated as dextrose) in the material, which amount is expressed as a percent of the total weight (dry basis) of the material. Such percent is referred to herein as "D.E. units". (Reducing sugars include, e.g., all monosaccharides; maltose; cellobiose; and lactose. Sucrose is a non-reducing sugar). The D.E. of a material consisting of two or more components can be calculated by multiplying the weight fraction ("w.f.") of each component of the material by the D.E. of such component and adding the resulting products of multiplication. For example, a material consisting of 20% (0.20 w.f.) component A having a D.E. of 10 D.E. units and 80% (0.80 w.f.) component B having a D.E. of zero has a D.E. of 2 ($0.20 \times 10 + 0.80 \times 0$) D.E. units.

The salt substitute of the present invention contains at least two essential components, namely

2

potassium chloride and maltodextrin, as indicated above. In addition the salt substitute of the invention may include sodium chloride and/or cream of tartar. In general, these components may be combined in any relative proportions in accordance with the teachings hereof to prepare a broad range of salt substitutes useful for a wide variety of end use applications, e.g., for table salt, inclusion in snack foods (e.g., pretzels, potato chips (potato crisps), corn chips (corn crisps), etc.), cereals, baked goods and other edible compositions such as those which heretofore have included common salt (i.e., sodium chloride) as an ingredient thereof. In use, the salt substitutes of the present invention may be substituted in whole or in part for the common salt component of heretofore known edible compositions.

When the salt substitute includes only the two components potassium chloride and maltodextrin, these may be present in the below indicated amounts:

potassium chloride: from about 99 to about 60%, and

maltodextrin: from about 1 to about 40%,

wherein the percentage amounts are by weight based on the combined weight of such components.

As a general preference, the potassium chloride component in such a two component mixture is included in an amount from about 90 to about 70% and the maltodextrin component is included in an amount from about 10 to about 30%, wherein the percentage amounts are by weight based on the combined weight of such components.

More preferably, the potassium chloride is included in such a two component mixture in an amount from about 85 to about 80% and the maltodextrin is included in an amount from about 15 to about 20%, such percentages being by weight and on the aforesaid basis (i.e., the combined total weight of these components being 100% by weight).

When the salt substitute includes as its three essential components potassium chloride, maltodextrin and sodium chloride, these may be included in the below indicated amounts:

potassium chloride: from about 91 to about 19%,

maltodextrin: from about 1 to about 40%, and

sodium chloride: from about 0.1 to about 75%,

wherein the percentage amounts are by weight based on the combined weight of such components.

As a general preference, the potassium chloride components in such a three component composition is included in an amount from about 91 to about 20%, the maltodextrin component is included in an amount from about 10 to about 30%, and the sodium chloride component is included in an amount from about 1 to about 50%, wherein the percentage amounts are by weight based on the combined weight of the three components set forth above.

More preferably, the potassium chloride is included in such a three component mixture in an amount from about 85 to about 65%, the maltodextrin is included in an amount from about 15 to about 20%, and the sodium chloride is included in an amount from about 3 to about 15%, such percentages being by weight and on the aforesaid basis (i.e., the combined total weight of these three components being 100% by weight).

Advantageously, the above-described salt-substitute compositions of the present invention further include cream of tartar in admixture with the three above-mentioned components, i.e. potassium chloride, maltodextrin and sodium chloride. In any such embodiment cream of tartar can be included in any effective amount, that is, an amount such that the admixture more closely approaches common salt in at least one taste characteristic than a reference composition which is substantially the same as the admixture except not including the cream of tartar and including additional potassium chloride in an amount equal to the amount of cream of tartar. In general, such amount may be up to about 1% or more, based on the total weight of the four components.

The amounts of the components in these four component embodiments may be, for example:

potassium chloride: from about 91 to about 19%,

maltodextrin: from about 1 to about 40%,

sodium chloride: from about 0.1 to about 50%, and

cream of tartar: from about 0.1 to about 0.9%,

wherein the percentage amounts are by weight based on the combined weight of said components.

As a general preference, the potassium chloride component is included in such a four component composition in an amount from about 91 to about 19%, the maltodextrin component is included in an amount from about 10 to about 30%, the sodium chloride component is included in an amount from about 0.1% to about 50%, and the cream of tartar component is included in an amount from about 0.1 to about 0.7%, wherein the percentage amounts are by weight based on the combined weight of the four components set forth above.

More preferably, the potassium chloride is included in an amount from about 85 to about 65%, the maltodextrin is included in an amount from about 15 to about 20%, the sodium chloride is included in an amount from about 0.1 to about 15%, and the cream of tartar is included in an amount from about 0.1 to about 0.5%, such percentages being by weight and on the aforesaid basis (i.e., the combined total weight of these four components being 100% by weight).

Cream of tartar suitably included herein is commercially available from McCormick & Co. (Baltimore, Maryland). In general, cream of tartar is preferably included in the above mentioned four component compositions in an amount of about 0.33%.

When the salt substitute includes the three components potassium chloride, maltodextrin and cream of tartar, these may be present in the below indicated amounts:

potassium chloride: from about 99 to about 59%,

maltodextrin: from about 1 to about 40%, and

cream of tartar: from about 0.1 to about 0.9%,

wherein the percentage amounts are by weight based on the combined weight of such components.

As a general preference, the potassium chloride component is included in such a three component mixture in an amount from about 91 to about 69%, the maltodextrin component is included in an amount from about 10 to about 30%, and the cream of tartar component is included in an amount from about 0.1 to about 0.7%, wherein the percentage amounts are by weight based on the combined weight of these components.

More preferably, the potassium chloride is included in an amount from about 85 to about 79%, the maltodextrin is included in an amount from about 15 to about 20%, and the cream of tartar is included in an amount from about 0.1 to about 0.5%, such percentages being by weight and on the aforesaid basis (i.e., the combined total weight of these three components being 100% by weight.

For human consumption of the salt-substitute compositions, all ingredients employed should be humanly edible, e.g., Food Chemical Codex grade.

Any suitable maltodextrin may be employed as the maltodextrin component. The maltodextrin employed is preferably a water-soluble maltodextrin having at least a major portion (e.g., slightly more than 50%, preferably about 60% or more) of one or more polysaccharides having a D.P. (i.e., degree of polymerization) of at least 10. More preferably, the maltodextrin employed is additionally a starch hydrolyzate of low sweetness having a low dextrose equivalent value of from about 5 to about 20 more preferably about 5 to about 15 D.E. units, high water solubility with substantial freedom from haze and low hygroscopicity. The most preferred maltodextrin employed herein is that commercially available from Grain Processing Corporation (GPC), Muscatine, Iowa, under the designation MALTRIN[R] M100 maltodextrin. According to the "Typical Analysis" in GPC Bulletin 11011 entitled MALTRIN Maltodextrins & Corn Syrup Solids, M100 maltodextrin has a D.E. of about 9—12 D.E. units and a "Carbohydrate Composition, % (db)" as follows: dextrose (1.0), disaccharides (4.0), trisaccharides (6.0) and "tetrasaccharides & higher" (89.0). According to GPC Product Data Sheet 6011 for MALTRIN M100 maltodextrin, the M100 has a "Typical Carbohydrate Profile (dry basis) in % as follows: monosaccharides (1%), disaccharides (4%), trisaccharides (6%), tetrasaccharides (5%) and "pentasaccharides & above" (84%).

According to GPC Bullein 9102 relating to "Carbohydrate Profile" of MALTRIN maltodextrins and corn syrup solids, M100 maltodextrin has the following "Typical carbohydrate profile"

| Saccharides—by degree of polymerization | Amount % | |
| --- | --- | --- |
| | Average | Range |
| DP1 | 0.5 | 0.3—0.8 |
| DP2 | 2.7 | 2.3—2.9 |
| DP3 | 4.3 | 4.2—5.0 |
| DP4 | 3.7 | 3.3—4.1 |
| DP5 | 3.1 | 2.7—3.4 |
| DP6 | 5.0 | 0.7—6.0 |
| DP7 | 7.1 | 6.5—8.3 |
| DP8 | 4.5 | 4.2—5.3 |
| DP9 | 3.1 | 2.8—3.6 |
| DP10 | 1.6 | 0.6—2.9 |
| Above DP10 | 64.4 | 56.8—68.1 |

The above GPC bulletins and data sheet are incorporated herein by reference.

Maltodextrins suitable for use herein may be prepared, for example, in accordance with the methods disclosed in U.S. Patents 3,560,343; 3,663,369; 3,849,194; and 4,298,400. These patents are incorporated herein by reference.

The salt substitutes may be prepared from raw material ingredients having any suitable particle sizes.

**0 130 822**

Each component may have a single particle size or may have a particle-size distribution, i.e., a range of particle sizes. The particle size or particle-size distribution of each component is preferably selected such that the resulting admixture of components is homogeneous and substantially free of segregation under storage and handling conditions. For best results, the potassium chloride particles generally have larger weight-average size than the weight-average size of the particles of the maltodextrin component.

As used herein, the term "particle" includes extremely small pieces of matter and small agglomerates of clusters thereof.

For example, good results have been obtained by admixing the following commercially available materials having the indicated typical particle-size distribution (in weight percent as a function of mesh size, U.S. Sieve, with a slash symbol (/) meaning "to"):

Potassium chloride ("code 6842-powder", Mallinckrodt, Inc.)

| Mesh | | | Wt.% |
|---|---|---|---|
| +40 | (i.e. | >425 μm) | 0 |
| −40/+60 | (i.e. 250—425 μm) | | 18 |
| −60/+70 | (i.e. 212—250 μm) | | 16 |
| −70/+100 | (i.e. 150—212 μm) | | 33 |
| −100 | (i.e. | <150 μm) | 33 |

Maltodextrin (Maltrin[R] M100, Grain Processing Corporation)

| Mesh | | | Wt.% |
|---|---|---|---|
| +40 | (i.e. | >425 μm) | 0 |
| −40/+60 | (i.e. 250—425 μm) | | 1 |
| −60/+80 | (i.e. 180—250 μm) | | 2 |
| −80/+100 | (i.e. 150—180 μm) | | 4 |
| −100/+140 | (i.e. 106—150 μm) | | 11 |
| −140/+200 | (i.e. 75—106 μm) | | 27 |
| −200/+325 | (i.e. 45— 75 μm) | | 34 |
| −325 | (i.e. | <45 μm) | 21 |

Good results have been obtained by admixing the two materials set forth immediately above with one or both of the following commercially available materials having the indicated typical particle-size distribution (given on the above basis):

Sodium chloride ("Popcorn Salt", Diamond Crystal Co.)

| Mesh | | | Wt.% |
|---|---|---|---|
| +60 | (i.e. | >250 μm) | 0.1 |
| −60/+80 | (i.e. 180—250 μm) | | 0.4 |
| −80/+100 | (i.e. 150—180 μm) | | 17.1 |
| −100/+140 | (i.e. 106—150 μm) | | 38.0 |
| −140/+200 | (i.e. 75—106 μm) | | 27.1 |
| −200 | (i.e. | <75 μm) | 17.1 |

5

**0 130 822**

Cream of tartar, food grade
(McCormick & Co.)

| Mesh | | | Wt.% |
|---|---|---|---|
| +170 | (i.e. | >90 μm) | 0 |
| −170/230 | (i.e. 63—90 μm) | | 3.3 |
| −230/+325 | (i.e. 45—63 μm) | | 7.1 |
| −325/+400 | (i.e. 38—45 μm) | | 8.9 |
| −400 | (i.e. | <38 μm) | 80.7 |

Inspection of the above typical size-distribution data shows that typically 100% of Code 6842 potassium chloride will pass a 40-mesh (425 μm) screen, while 67% will so pass and be retained on a 100-mesh (150 μm) screen; 100% of Maltrin M100 maltodextrin will pass a 40-mesh (425 μm) screen, 97% will pass an 80-mesh (180 μm) screen, and 77% will pass an 80-mesh (180 μm) screen and be retained on a 325-mesh (45 μm) screen; 99.9% of such "Popcorn Salt" sodium chloride will pass a 60-mesh (250 μm) screen, 99.5% will pass an 80-mesh (180 μm) screen, and 92.4% will pass an 80-mesh (180 μm) screen and be retained on a 200-mesh (75 μm) screen: 100% of such cream of tartar will pass a 170-mesh (90 μm) screen, 96.7% will pass a 230-mesh (63 μm) screen, and 16% will pass a 230-mesh (63 μm) screen and be retained on a 400-mesh (38 μm) screen.

The particular size potassium chloride may be selected to meet any particular end use application. For example, where "pretzel grade" salt substitutes (i.e., plus 35 mesh (500 μm) US sieve size) are desired, potassium chloride having a particle size greater than 35 mesh (500 μm) may be advantageously employed as the starting material. Where "shaker grade" (i.e., minus 35 to plus 60 mesh, that is to say 250 to 500 μm) is desired for the salt substitute, potassium chloride having a particle size from minus 35 to plus 60 mesh (i.e. 250 to 500 μm) may advantageously be employed as the potassium chloride starting material. Where a "popcorn grade" (i.e., minus 60 mesh, that is to say less than 250 μm) size salt substitute is desired, the potassium chloride starting material may advantageously have a particle size of minus 60 mesh (i.e. less than 250 μm). The description set forth above regarding relative sizes of the components (i.e., potassium chloride particles having larger weight-average size) is applicable to such grades.

The salt substitutes of the present invention are preferably formulated as admixtures of very finely divided particles for use as all or part of the saltflavor-producing component of such snack foods as potato chips (potato crisps), corn chips (corn crisps), popcorn and others which commonly employ salt powder as such component. As a general preference, all particles included in such admixtures will pass a U.S. Sieve 40-mesh (425 μm) screen and the potassium chloride particles will have larger weight-average size as set forth above.

The salt substitutes of the present invention are preferably prepared by thoroughly admixing the components as substantially dry solids to form a uniform admixture.

The as-produced salt substitutes may be used as is (with or without size classification) or, if desired, may be subjected to size reduction (e.g., crushing) prior to use.

Practice of the present invention is illustrated by the following examples. All parts and percentages given throughout this disclosure including the examples and claims appended hereto, are by weight unless otherwise indicated.

Unless otherwise indicated, the taste panel results set forth in the examples resulted from the following taste test procedure. Each panelist touched his tongue sequentially to each taste sample, which was supported on a clean paper napkin, made his taste evaluation, and rinsed his mouth with water prior to so tasting each sample. Each panel included at least three panelists. The evaluation or rating system is set forth herein below.

Examples 1—5

Maltodextrin M100 (Grain Processing Corporation) in five separate amounts from about 7 to about 37 parts ("MD" and potassium chloride (Code 6842-powder, Mallinckrodt, Inc.), in five separate corresponding amounts from about 93 to about 63 parts, were thoroughly admixed as substantially dry solids at about 20—25°C., thereby providing five particulate admixtures each of which was substantially uniform throughout. Typical particle-size distributions of these commercially available materials are set forth above.

Based on method of preparation, each admixture contained the approximate amounts of potassium chloride (KCl) and maltodextrin ("MD") set forth therefor in Table I under the heading "(I) Invention".

Visual observation (without magnification) of each admixture showed that it was substantially identical in appearance to sodium chloride of like size. Each admixture was found to be substantially free-flowing and substantially nonhygroscopic. Samples of each admixture composition were subjected to a taste test

6

for evaluation thereof as a salt substitute. Samples of comparative materials were included in the test. Results of the test are set forth in Table I.

TABLE I
Taste panel results

| Source of taste sample | | | Taste characteristics (a) | | | | |
|---|---|---|---|---|---|---|---|
| | | | Salti-ness | Bitter-metallic | Cooling | After-taste | Sweet-ness |
| (I) Invention | | | | | | | |
| Ex. | %KCl | %MD | | | | | |
| 1 | 93 | 7 | 1.17 | 2.5 | 1.67 | 1.33 | 0.33 |
| 2 | 85 | 15 | 1.0 | 2.0 | 0.58 | 0.75 | 0.33 |
| 3 | 80 | 20 | 1.17 | 1.17 | 0.33 | 0.58 | 0.33 |
| 4 | 75 | 25 | 1.25 | 0.58 | 0.42 | 0.67 | 0.67 |
| 5 | 63 | 37 | 2.33 | 0.58 | 0.5 | 0.63 | 1.0 |
| (II) Comparative materials | | | | | | | |
| Sodium chloride[b] | | | 0.83 | 0 | 0 | 0.67 | 0 |
| Potassium Chloride[c] | | | 0.83 | 3.17 | 2.83 | 2.58 | 0 |
| Cumberland *Nu Salt*[d] | | | 1.33 | 2.17 | 1.83 | 2.08 | 1.08 |

[a]Each numerical result for each characteristic is the arithmetic average of each panelist's numeral rating made in accordance with the rating system set forth in Table II.
[b]"Popcorn Salt", Diamond Crystal Salt Co.
[c]"6842-Powder", Mallinckrodt, Inc., St. Louis, Missouri.
[d]("Sweet "N Low Nu-Salt" Cumberland Packing Corp., Brooklyn, NY) Approximate Analysis: 84% KCl, 15% dextrose, 0.08% "CT" (cream of tartar), 0.7% insoluble matter, 1.5% water. Represented as containing less than 10 mg of sodium per 100 g.

TABLE II
Rating system

| Meaning of numerical rating | Related taste characteristic Saltiness | All others |
|---|---|---|
| 0 | Saltier than salt | None |
| 1 | High salt-like taste | Low |
| 2 | Medium salt-like taste | Medium |
| 3 | Low salt-like taste | High |
| 4 | No salt-like taste | Overwhelming |

As shown by the taste panel results in Table I, each of the two component salt substitute admixtures of the present invention illustrated by Examples 1—5 has been found to closely approach the taste of common salt (sodium chloride) and more closely approach such taste than each of the other comparative materials set forth therein in at least one taste characteristic.

The salt-substitute composition set forth in Example 3 above is contemplated to be the best embodiment of the two component composition of this invention.

Example 6
A composition of this invention containing potassium chloride, maltodextrin and sodium chloride was prepared in this example.
Maltodextrin M100 (Grain Processing Corporation) 20 parts ("MD"); potassium chloride (Code

**0 130 822**

6842-powder, Mallinckrodt, Inc.), 65 parts; and USP sodium chloride ("Popcorn Salt", Diamond Crystal Salt Co.), 15 parts, were thoroughly admixed as substantially dry solids at about 20—25°C., thereby providing a particulate admixture which was substantially uniform throughout. Typical particle size distributions of these commercially available materials are set forth above.

Based on method of preparation, the admixture contained about 65% KCl, about 20% maltodextrin ("MD") and about 15% NaCl.

Visual observation (without magnification) of the admixture showed that it was substantially identical in appearance to sodium chloride of like size. The admixture was found to be substantially free-flowing and substantially nonhygroscopic. Samples of the admixture composition were subjected to a taste test for evaluation thereof as a salt substitute. Samples of comparative materials were included in the test. Results of the test are set forth in Table III.

TABLE III
Taste panel results

| Source of taste sample | Taste characteristics[a] | | | | |
|---|---|---|---|---|---|
| | Salti ness | Bitter-metallic | Cooling | After-taste | Sweet-ness |
| (I) Invention Example 6 blend of: KCl 65% MD 20% NaCl 15% | 1.0 | 1.53 | 1.25 | 1.25 | 0.5 |
| (II) Comparative materials 20% NaCl+80% KCl[b] | 1.0 | 3.0 | 3.0 | 3.0 | 0 |
| 50% NaCl+50% KCl[b] | 1.13 | 2.75 | 1.75 | 2.25 | 0 |
| "Lite Salt"[c] (Morton Salt Co.) | 1.25 | 2.75 | 1.75 | 3.0 | 0 |
| Coated KCl-containing composition[d] KCl 65% (Core) MD 20% (Coating) NaCl 15% (Coating) | 1.25 | 0.63 | 0.63 | 0.63 | 1.0 |
| Sodium Chloride ("7851—Granular", Mallinckrodt, Inc.) | 1.0 | 0 | 0 | 0 | 0 |

[a]Each numerical result for each characteristic is the arithmetic average of each panelist's numerical rating made in accordance with the rating system set forth in Table II.

[b]2-component mixtures within numerical range disclosed in Frank et al., U.S. Pat. Nos. 3,514,296 and Re. 27,981, each prepared by thoroughly admixing granular NaCl and granular KCl in the indicated proportions until a homogeneous product was attained.

[c]Analysis: 49.5% NaCl, 49.5% KCl, 1% other (including calcium silicate, magnesium carbonate, dextrose and potassium iodide).

[d]Prepared by spraying an aqueous solution containing 20 parts MALTRIN[R] M100 maltodextrin ("MD"), 15 parts NaCl and approximately 60 parts water onto an agitated bed of KCl (Code 6307-granular, Mallinckrodt, Inc.), 65 parts, maintained about 120°C. and continuing agitation at such temperature until the resulting coated particles were substantially dry.

As shown by the taste panel results in Table III, the salt-substitute admixture of the present invention illustrated by Example 6 has been found to closely approach the taste of common salt (sodium chloride) and more closely approach such taste than each of the other comparative materials set forth therein in at least one taste characteristic.

Examples 7 and 8

The procedure of Example 6 was repeated in each of these examples except that the amounts of maltodextrin ("MD"), sodium chloride and potassium chloride were varied over the following ranges: 20—7.4 parts MD, 16—18.5 parts sodium chloride and 74.1—64 parts potassium chloride.

8

The approximate amounts of the components of the resulting particular admixture compositions of Examples 7 and 8 are set forth below:

| Components | Approximate amount of components (%) | |
|---|---|---|
| | Ex. 7 | Ex. 8 |
| Potassium chloride | 64 | 74.1 |
| Maltodextrin | 20 | 7.4 |
| Sodium Chloride | 16 | 18.5 |

The results of visual inspection with respect to appearance relative to the appearance of sodium chloride were substantially the same for Examples 7 and 8 as for Example 6 above. The admixtures prepared in Example 7 and Example 8 were found to be substantially free-flowing and substantially non-hygroscopic. Samples of the compositions of Example 7 and Example 8 were subjected to a taste test for evaluation thereof as salt substitutes. Samples of comparative materials were included in the test. Taste panel itemized evaluations by taste category for Examples 7 and 8 appear in Table IV, along with evaluations for the comparative materials.

TABLE IV
Taste panel results

| Source of taste sample | Taste characteristics[a] | | | | |
|---|---|---|---|---|---|
| | Salti-ness | Bitter-metallic | Cooling | After-taste | Sweet-ness |
| (I) Invention | | | | | |
| Example 7 blend of:<br>KCl 64%<br>MD 20%<br>NaCl 16% | 1.0 | 0.38 | 0.63 | 0.5 | .5 |
| Example 8 blend of:<br>KCl 74.1%<br>MD 7.4%<br>NaCl 18.5% | 1.0 | 1.25 | 1.38 | 1.5 | .75 |
| (II) Comparative materials<br>Homogeneous Blends<br>Prepared by Thoroughly<br>Admixing the Indicated<br>Ingredients in the<br>Indicated Approximate<br>Proportions (%) | | | | | |
| KCl/Dextrose/NaCl | | | | | |
| (1) 64 20 16 | 1.38 | 0.63 | 1.38 | 1.5 | 2.75 |
| (2) 78.4 2 19.6 | 1.38 | 2.5 | 2.0 | 3.0 | 1.0 |
| (3) 74.1 7.4 18.5 | 1.25 | 2.5 | 2.25 | 3.0 | 2.0 |

[a]Each numerical result for each characteristic is the arithmetic average of each panelist's numerical rating made in accordance with the rating system set forth in Table II.
Note:
(A) All samples have a KCl:NaCl weight ratio of 4:1.
(B) Comparative Material No. 2 has same D.E. (2 dextrose equivalent units) as that of Example 2.
(C) The blends in Example 7 and Example 8 were substantially homogeneous.

As shown by the taste panel results in Table IV, the salt substitutes of the present invention illustrated by Examples 7 and 8 have been found to closely approach the taste of common salt (sodium chloride) and more closely approach such taste than the other comparative materials set forth therein in at least one taste characteristic.

9

Example 9

A composition of this invention containing potassium chloride, maltodextrin ("MD"), sodium chloride and cream of tartar ("CT") was prepared in this example.

Maltodextrin M100 (Grain Processing Corporation) 20 parts ("MD"; potassium chloride (Code 6842-powder, Mallinckrodt, Inc.), 64.67 parts; USP sodium chloride ("Popcorn Salt", Diamond Crystal Salt Co.), 15 parts; and cream of tartar (food grade, McCormick & Co.), 0.33 part, were thoroughly admixed as substantially dry solids at about 20—25°C., thereby providing a particulate admixture which was substantially uniform throughout. Typical particle-size distributions of these commercially available materials are set forth above.

Based on method of preparation, the admixture contained about 65% KCl, about 20% maltodextrin ("MD"), about 15% NaCl, and about 0.33% cream of tartar ("CT").

Visual observation (without magnification) of the admixture showed that it was substantially identical in appearance to sodium chloride of like size. The admixture was found to be substantially free-flowing and substantially non-hygroscopic. Samples of the admixture composition were subjected to a taste test for evaluation thereof as a salt substitute. Samples of comparative materials were included in the test. Results of the test are set forth in Table V. This taste test was a portion of the taste test employed in Example 6.

TABLE V
Taste panel results

| Source of taste sample | Taste characteristics[a] | | | | |
|---|---|---|---|---|---|
| | Salti-ness | Bitter-metallic | Cooling | After-taste | Sweet-ness |
| (I) Invention Example 9 blend of:<br>KCl 64.67%<br>MD 20%<br>CT 0.33%<br>NaCl 15% | 1.13 | 0.88 | 1.13 | 0.75 | 0.5 |
| (II) Comparative materials<br>20% NaCl+80% KCl[b] | 1.0 | 3.0 | 3.0 | 3.0 | 0 |
| 50% NaCl+50% KCl[b] | 1.13 | 2.75 | 1.75 | 2.25 | 0 |
| "Lite Salt"[c] (Morton Salt Co.) | 1.25 | 2.75 | 1.75 | 3.0 | 0 |
| Coating KCl—containing composition[d]<br>KCl 65% (Core)<br>MD 20% (Coating)<br>NaCl 15% (Coating) | 1.25 | 0.63 | 0.63 | 0.63 | 1.0 |
| Sodium chloride ("7851—Granular", Mallinckrodt, Inc.) | 1.0 | 0 | 0 | 0 | 0 |

[a]Each numerical result for each characteristic is the arithmetic average of each panelist's numerical rating made in accordance with the rating system set forth in Table II.

[b]2-component mixtures within numerical range disclosed in Frank et al., U.S. Pat. Nos. 3,514,296 and Re. 27,981, each prepared by thoroughly admixing granular NaCl and granular KCl in the indicated proportions until a homogeneous product was attained.

[c]Analysis: 49.5% NaCl, 49.5% KCl, 1% other (including calcium silicate, magnesium carbonate, dextrose and potassium iodide).

[d]Prepared by spraying an aqueous solution containing 20 parts MALTRIN[R] M100 maltodextrin ("MD"), 15 parts NaCl and approximately 60 parts water onto an agitated bed of KCl (Code 6307—granular, Mallinckrodt, Inc.), 65 parts, maintained about 120°C. and continuing agitation at such temperature until the resulting coated particles were substantially dry.

As shown by the taste panel results in Table V, the salt-substitute admixture of the present invention illustrated by Example 9 has been found to closely approach the taste of common salt (sodium chloride) and more closely approach such taste than each of the other comparative materials set forth therein at least one taste characteristic.

10

**0 130 822**

Comparison of the taste-characteristics ratings set forth in Table V for the admixture of Example 9 with the taste-characteristics ratings set forth in Table III for the admixture of Example 6 shows that the admixture of Example 9 (including CT) was found to still more closely approach common salt in taste than the admixture of Example 6 (not including CT).

Examples 10—12

Additional admixture compositions of this invention containing potassium chloride, maltodextrin ("MD"), sodium chloride and cream of tartar ("CT") were prepared in these examples. The preparation procedure of Example 9 was repeated in each of these examples except that the amounts of potassium chloride, sodium chloride and cream of tartar added in forming the admixtures were as follows: Example 10—KCl (71.76 parts, NaCl (8 parts) and CT (0.24 part); Example 11—KCl (71.64 parts), NaCl (8 parts) and CT (0.36 part); and Example 12—KCl (75.62 parts), NaCl (4 parts) and CT (0.38 part).

Each of the resulting particulate admixtures was substantially uniform throughout.

Based on the method of preparation, the approximate amounts of the components in the compositions of Examples 10—12 are set forth below:

| Components | Approximate amount of components (%) | | |
| --- | --- | --- | --- |
| | Ex. 10 | Ex. 11 | Ex. 12 |
| Potassium chloride | 71.76 | 71.64 | 75.62 |
| Maltodextrin ("MD") | 20 | 10 | 20 |
| Sodium Chloride | 8 | 8 | 4 |
| Cream of Tartar ("CT") | 0.24 | 0.36 | 0.38 |

Visual observation (without magnification) of each admixture showed that it was substantially identical in appearance to sodium chloride of like size. Each admixture was found to be substantially free-flowing and substantially nonhygroscopic. Each admixture composition was tasted and found to closely approach common salt in taste. The admixture of Example 10 was found to more closely approach common salt from the standpoint of saltiness than the admixture of Example 12. The admixture of Example 11 was found to more closely approach common salt from such standpoint than the admixture of Example 10.

It is recognized that different end users may desired different levels of sodium chloride, and accordingly the best salt-substitute composition containing, in addition to potassium chloride and maltodextrin, also sodium chloride (and possibly also cream of tartar) will depend on the desires of a given end user.

In general, regarding three component compositions of this invention not including cream of tartar (i.e. compositions containing potassium chloride, maltodextrin and sodium chloride, but not cream of tartar), the salt substitute set forth in Example 6 above is contemplated to be the best embodiment from the standpoint of overall taste appeal, while the salt substitute set forth below is contemplated to be the best sodium chloride containing three component embodiment from the standpoint of commercial attractiveness:

| Component | Approximate amount |
| --- | --- |
| Potassium Chloride | 72% |
| Maltodextrin M100 | 20% |
| Sodium Chloride | 8% |

In general, regarding the four component compositions of this invention including cream of tartar (as usually preferred), the salt substitutes set forth as "A" and "B" below are contemplated to be the best embodiment from the standpoint of overall taste appeal and the best embodiment from the standpoint of commercial attractiveness, respectively:

11

**0 130 822**

| Component | Approximate amounts (%) | |
|---|---|---|
| | "A" | "B" |
| Potassium Chloride | 71.67 | 76.67 |
| Maltodextrin M100 | 20 | 20 |
| Sodium Chloride | 8 | 4 |
| Cream of Tartar | 0.33 | 0.33 |

Examples 13—16

Maltodextrin M100 (Grain Processing Corporation) in four separate amounts of 20 parts each ("MD"); potassium chloride (Code 6842-powder, Mallinckrodt, Inc.), in four separate amounts from about 79.85 to about 79.2 parts; and cream of tartar, food grade (McCormick & Co., Baltimore, Maryland), in four separate amounts from about 0.15 to about 0.8 part ("CT"), were thoroughly admixed as substantially dry solids at about 20—25°C., thereby providing four particulate admixtures, each of which was substantially uniform throughout. Typical particle-size distributions of these commercially available materials are set forth above.

Based on method of preparation, each admixture contained the approximate amounts of potassium chloride (KCl), maltodextrin ("MD") and cream of tartar ("CT") set forth therefor in Table VI under the heading "I Invention".

Visual observation (without magnification) of each admixture showed that it was substantially identical in appearance to sodium chloride of like size. Each admixture was found to be substantially free-flowing and substantially nonhygroscopic. Samples of each admixture composition were subjected to a taste test for evaluation thereof as a salt substitute. Samples of comparative materials were included in the test. Results of the test are set forth in Table VI.

TABLE VI
Taste panel results

| Source of taste sample | | | | Taste characteristics[a] | | | | |
|---|---|---|---|---|---|---|---|---|
| | | | | Salti-ness | Bitter-metallic | Cooling | After-taste | Sweet-ness |
| (I) Invention | | | | | | | | |
| Ex. | %KCl | %MD | %CT | | | | | |
| 13 | 79.85 | 20 | 0.15 | 1.17 | 0.83 | 1.0 | 1.0 | 0.33 |
| 14 | 79.6 | 20 | 0.4 | 1.33 | 1.5 | 1.17 | 0.5 | 0.33 |
| 15 | 79.4 | 20 | 0.6 | 0.75 | 1.25 | 0.83 | 1.25 | 0 |
| 16 | 79.2 | 20 | 0.8 | 0.83 | 1.83 | 1.17 | 1.5 | 0 |
| (II) Comparative materials | | | | | | | | |
| Sodium Chloride[b] | | | | 1 | 0 | 0 | 0.33 | 0 |
| Potassium Chloride[c] | | | | 0.83 | 3.0 | 2.5 | 2.67 | 0 |
| Cumberland *Nu Salt*[d] | | | | 1.08 | 2.33 | 2.0 | 2.0 | 0.83 |

[a]Each numerical result for each characteristic is the arithmetic average of each panelist's numerical rating made in accordance with the rating system set forth in Table II.
[b]"Popcorn Salt", Diamond Crystal Salt Co.
[c]"6842-Powder", Mallinckrodt, Inc., St. Louis, Missouri.
[d]("Sweet 'N Low Nu-Salt" Cumberland Packing Corp., Brooklyn, NY) Approximate Analysis: 84% KCl, 15% dextrose, 0.08% "CT" (cream of tartar), 0.7% insoluble matter, 1.5% water. Represented as containing less than 10 mg of sodium per 100 g.

As shown by the taste panel results in Table VI, each of the salt-substitute admixtures of the present invention illustrated by Examples 13—16 has been found to closely approach the taste of common salt (sodium chloride) and more closely approach such taste than each of the other comparative materials set forth therein in at least one taste characteristic.

12

Examples 17 and 18

The procedure of Examples 13—16 was repeated in each of these examples except that the amounts of maltodextrin ("MD"), cream of tartar ("CT") and potassium chloride were varied over the following approximate ranges: 24.7—9.06 parts MD, 0.3—0.36 parts CT and 75—90.58 parts potassium chloride.

The approximate amounts of the components of the resulting particulate uniform admixtures of Examples 17 and 18 are set forth below, based on method of preparation:

| | Approximate amount of components (%) | |
| Components | Ex. 17 | Ex. 18 |
| --- | --- | --- |
| Potassium chloride | 75 | 90.58 |
| Maltodextrin | 24.7 | 9.06 |
| Cream of Tartar | 0.3 | 0.36 |

The results of visual inspection with respect to appearance relative to the appearance of sodium chloride were substantially the same for Examples 17 and 18 as for Examples 13—16 above. The admixtures prepared in Example 17 and Example 18 were found to be substantially free-flowing and substantially non-hygroscopic. Samples of the compositions of Example 17 and Example 18 were subjected to a taste test for evaluation thereof as salt substitutes. Samples of comparative materials were included in the test. Results of the test are set forth in Table VII.

TABLE VII
Taste panel results

| Source of taste sample | | | | Taste characteristics[a] | | | | |
| --- | --- | --- | --- | --- | --- | --- | --- | --- |
| | | | | Salti-ness | Bitter-metallic | Cooling | After-taste | Sweet-ness |
| (I) Invention | | | | | | | | |
| Ex. | %KCl | %MD | %CT | | | | | |
| 17 | 75 | 24.7 | 0.3 | 1.38 | 2.0 | 2.38 | 1.75 | 0.88 |
| 18 | 90.58 | 9.06 | 0.36 | 1.13 | 1.63 | 1.75 | 1.5 | 1.0 |
| (II) Comparative materials Homogeneous Blends Prepared by Thoroughly Admixing the Indicated Ingredients in the Indicated Approximate Proportions (%)[b] | | | | | | | | |
| KCl/Dextrose/CT | | | | | | | | |
| (1) | 75 | 24.7 | 0.3 | 1.25 | 2.75 | 2.5 | 2.0 | 2.75 |
| (2) | 90.58 | 9.06 | 0.36 | 1.25 | 3.0 | 2.75 | 2.5 | 1.5 |

[a]Each numerical result for each characteristic is the arithmetic average of each panelist's numerical rating made in accordance with the rating system set forth in Table II.

[b]Sources of the ingredients were as follows—KCl: potassium chloride "6842-Powder", Mallinckrodt, Inc., St. Louis, Missouri; Dextrose: "AR" grade dextrose, Mallinckrodt, Inc.; CT: food-grade cream of tartar, McCormick & Co., Baltimore, Maryland.

As shown by the taste panel results in Table VII, the salt-substitute admixtures of the present invention illustrated by Examples 17 and 18 have been found to closely approach the taste of common salt (sodium chloride), as set forth in Table VI, and more closely approach such taste than the comparative KCl-dextrose-CT materials set forth in Table VII in at least one taste characteristic.

The salt substitute set forth in Example 2 above is contemplated to be the best embodiment of the sodium chloride free component of this invention.

**0 130 822**

It is contemplated that carrying out production of large-scale (e.g., commercial-size) quantities of the salt substitute of the present invention can best be effected by admixing the components in a ribbon blender.

**Claims for the Contracting States: BE, CH, DE, FR, GB, IT, LI, LU, NL, SE**

1. A salt substitute composition which comprises a uniform admixture comprising, as particulate components thereof:
   (a) potassium chloride and
   (b) maltodextrin,
wherein the dextrose equivalent (D.E.) of the admixture is not more than 10 D.E. units.

2. A composition according to claim 1, wherein the uniform admixture consists essentially of, as particulate components thereof:
   (a) potassium chloride and
   (b) maltodextrin.
wherein the dextrose equivalent (D.E.) of the combined amount of potassium chloride and maltodextrin is not more than 10 D.E. units, and wherein the components are present in the percentage amounts set forth:
   potassium chloride: from about 99 to about 60%, and
   maltodextrin: from about 1 to about 40%,
wherein the percentage amounts are by weight based on the combined weight of said components.

3. A composition according to claim 2, wherein the components are present in the percentage amounts set forth:
   potassium chloride: from about 90 to about 70%, and
   maltodextrin: from about 10 to about 30%.

4. A composition according to claim 3, wherein the components are present in the percentage amounts set forth:
   potassium chloride: from about 85 to about 80%, and
   maltodextrin: from about 15 to about 20%.

5. A composition according to claim 4, wherein the components are present in the percentage amounts set forth:
   potassium chloride: about 80% and
   maltodextrin: about 20%.

6. A composition according to any one of claims 2 to 5, wherein the average size of the potassium chloride particles is larger than the average size of the maltodextrin particles.

7. A composition according to claim 6, wherein:
   (a) the potassium chloride has a particle-size distribution such that about 100% of the potassium chloride will pass a 40-mesh (425 μm) screen and about 67% will be retained on a 100-mesh (150 μm) screen; and
   (b) the maltodextrin has a particle-size distribution such that about 100% of the maltodextrin will pass a mesh 40-mesh (425 μm) screen, about 97% will pass an 80-mesh (180 μm) screen and about 77% will pass an 80-mesh (180 μm) screen and be retained on a 325-mesh (45 μm) screen.

8. A composition according to claim 1, wherein the uniform admixture comprises as particulate components thereof:
   (a) potassium chloride,
   (b) maltodextrin, and
   (c) sodium chloride,
wherein the dextrose equivalent (D.E.) of the combined amount of potassium chloride, maltodextrin and sodium chloride is not more than 10 D.E. units, and the components are present in the percentage amounts set forth:
   potassium chloride: from about 91 to about 19%,
   maltodextrin: from about 1 to about 40%, and
   sodium chloride: from about 0.1 to about 75%,
wherein the percentage amounts are by weight based on the combined weight of said components.

9. A composition according to claim 8, wherein the components are present in the percentage amounts set forth:
   potassium chloride: from about 91 to about 20%,
   maltodextrin: from about 10 to about 30%, and
   sodium chloride: from about 1 to about 50%.

10. A composition according to claim 9, wherein the components are present in the percentage amounts set forth:
   potassium chloride: from about 85 to about 65%,
   maltodextrin: from about 15 to about 20%, and
   sodium chloride: from about 3 to about 15%.

11. A composition according to claim 8, wherein the amount of potassium chloride is about 65%, the amount of maltodextrin is about 20%, and the amount of sodium chloride is about 15%.

14

0 130 822

12. A composition according to claim 8, wherein the amount of potassium chloride is about 72%, the amount of maltodextrin is about 20% and the amount of sodium chloride is about 8%.

13. A composition according to any one of claims 8 to 12, wherein the average size of the potassium chloride particles is larger than both the average size of the maltodextrin particles and the average size of the sodium chloride particles.

14. A composition according to claim 13, wherein:

(a) the potassium chloride has a particle-size distribution such that about 100% of the potassium chloride will pass a 40-mesh (425 μm) screen and about 67% will be retained on a 100-mesh (150 μm) screen;

(b) the maltodextrin has a particle-size distribution such that about 100% of the maltodextrin will pass a 40-mesh (425 μm) screen, about 97% will pass an 80-mesh (180 μm) screen and about 77% will pass an 80-mesh (180 μm) screen and be retained on a 325-mesh (45 μm) screen; and

(c) the sodium chloride has a particle-size distribution such that about 99.9% of the sodium chloride will pass a 60-mesh (250 μm) screen, about 99.5 will pass an 80-mesh (180 μm) screen and about 82.4% will pass an 80-mesh (180 μm) screen and be retained on a 200-mesh (75 μm) screen.

15. A composition according to claim 1, wherein the uniform admixture comprises as particulate components thereof:

(a) potassium chloride,

(b) maltodextrin,

(c) sodium chloride, and

(d) cream of tartar.

wherein the dextrose equivalent (D.E.) of the combined amount of potassium chloride, maltodextrin, sodium chloride and cream of tartar is not more than 10 D.E. units, and wherein the components are present in the percentage amounts set forth:

potassium chloride: from about 91 to 19%,

maltodextrin: from about 1 to about 40%,

sodium chloride: from about 0.1 to about 75%, and

cream of tartar: from about 0.1 to about 0.9%,

wherein the percentage amounts are by weight based on the combined weight of said components.

16. A composition according to claim 15, wherein the components are present in the percentage amounts set forth:

potassium chloride: from about 91 to about 20%,

maltodextrin: from about 10 to about 30%,

sodium chloride: from about 1 to about 50%, and

cream of tartar: from about 0.1 to about 0.7%.

17. A composition according to claim 16, wherein the components are present in the percentage amounts set forth:

potassium chloride: from about 85 to about 65%,

maltodextrin: from about 15 to about 20%,

sodium chloride: from about 3 to about 15%, and

cream of tartar: from about 0.2 to about 0.5%.

18. A composition according to claim 15, wherein the amount of potassium chloride is about 71.67%, the amount of maltodextrin is about 20%, the amount of sodium chloride is about 8% and the amount of cream of tartar is about 0.33%.

19. A composition according to claim 15, wherein the amount of potassium chloride is about 75.67%, the amount of maltodextrin is about 20%, the amount of sodium chloride is about 4% and the amount of cream of tartar is about 0.33%.

20. A composition according to any one of claims 15 to 19, wherein the average size of the potassium chloride particles is larger than each of the following: the average size of the maltodextrin particles, the average size of the sodium chloride particles and the average size of the cream of tartar particles.

21. A composition according to claim 20, wherein:

(a) the potassium chloride has a particle-size distribution such that about 100% of the potassium chloride will pass a 40-mesh (425 μm) screen and about 67% will be retained on a 100-mesh (150 μm) screen;

(b) the maltodextrin has a particle-size distribution such that about 100% of the maltodextrin will pass a 40-mesh (425 μm) screen, about 97% will pass an 80-mesh (180 μm) screen and about 77% will pass an 80-mesh (180 μm) screen and be retained on a 325-mesh (45 μm) screen;

(c) the sodium chloride has a particle-size distribution such that about 99.9% of the sodium chloride will pass a 60-mesh (250 μm) screen, about 99.5% will pass an 80-mesh (180 μm) screen and about 82.4% will pass an 80-mesh (180 μm) screen and be retained on a 200-mesh (75 μm) screen; and

(d) the cream of tartar has a particle-size distribution such that about 100% of the cream of tartar will pass a 170-mesh (90 μm) screen, about 96.7% will pass a 230-mesh (63 μm) screen and about 16% will pass a 230-mesh (63 μm) screen and be retained on a 400-mesh (38 μm) screen.

22. A composition according to claim 1, wherein the uniform admixture comprises as particulate components thereof:

15

(a) potassium chloride,
(b) maltodextrin, and
(c) cream of tartar,

said admixture being free of sodium chloride, wherein the dextrose equivalent (D.E.) of the combined amount of potassium chloride, maltodextrin and cream of tartar is not more than 10 D.E. units, and wherein the components are present in the percentage amounts set forth:

potassium chloride: from about 99 to about 59%,
maltodextrin: from about 1 to about 40%, and
cream of tartar: from about 0.1 to about 0.9%,

wherein the percentage amounts are by weight based on the combined weight of said components.

23. A composition according to claim 22, wherein the components are present in the percentage amounts set forth:

potassium chloride: from about 91 to about 69%,
maltodextrin: from about 10 to about 30%, and
cream of tartar: from about 0.1 to about 0.7%.

24. A composition according to claim 23, wherein the components are present in the percentage amounts set forth:

potassium chloride: from about 85 to about 79%,
maltodextrin: from about 15 to about 20%, and
cream of tartar: from about 0.1 to about 0.5%.

25. A composition according to claim 24, wherein the components are present in the percentage amounts set forth:

potassium chloride: about 79.6%,
maltodextrin: about 20%, and
cream of tartar: about 0.4%.

26. A composition according to any one of claims 22 to 25, wherein the average size of the potassium chloride particles is larger than both the average size of the maltodextrin particles and the average size of the cream of tartar particles.

27. A composition according to claim 26, wherein:

(a) the potassium chloride has a particle-size distribution such that about 100% of the potassium chloride will pass a 40-mesh (425 µm) screen and about 67% will be rtained on a 100-mesh (150 µm) screen;

(b) the maltodextrin has a particle-size distribution such that about 100% of the maltodextrin will pass a 40-mesh (425 µm) screen, about 97% will pass an 80-mesh (180 µm) screen and about 77% will pass an 80-mesh (180 µm) screen and be retained on a 325-mesh (45 µm) screen; and

(c) the cream of tartar has a particle-size distribution such that about 100% of the cream of tartar will pass a 170-mesh (90 µm) screen, about 96.7 will pass a 230-mesh (63 µm) screen and about 16% will pass a 230-mesh (63 µm) screen and be retained on a 400-mesh (38 µm) screen.

28. A composition according to any one of claims 1 to 27, wherein said admixture is homogeneous.

29. A composition according to any one of claims 1 to 28, wherein said maltodextrin has a D.E. in the range from about 5 to about 20 D.E. units.

30. A composition according to claim 29, wherein said maltodextrin has a D.E. in the range from about 5 to 15 D.E. units.

31. A composition according to claim 30, wherein said maltodextrin has a D.E. in the range from about 9 to about 12 D.E. units.

32. A composition according to any one of claims 1 to 31, wherein said maltodextrin is a water-soluble maltodextrin including as at least a major portion thereof one or more polysaccharides having a degree of polymerization (D.P.) of at least 10.

33. A composition according to any one of claims 1 to 32, wherein said maltodextrin is a starch hydrolyzate.

34. A composition according to any one of claims 1 to 33, wherein said maltodextrin has the following saccharide content as determined by high performance liquid chromatography:

**0 130 822**

| Saccharides—by degree of polymerization | Amount | |
|---|---|---|
| | From about (%) | To about (%) |
| DP1 | 0.3 | 0.8 |
| DP2 | 2.3 | 2.9 |
| DP3 | 4.2 | 5.0 |
| DP4 | 3.3 | 4.1 |
| DP5 | 2.7 | 3.4 |
| DP6 | 0.7 | 6.0 |
| DP7 | 6.5 | 8.3 |
| DP8 | 4.2 | 5.3 |
| DP9 | 2.8 | 3.6 |
| DP10 | 0.6 | 2.9 |
| DP (higher than 10) | 57 | 68 |

35. A composition according to claim 34, wherein said saccharide content is as follows:

| Saccharides—by degree of polymerization | Amount (%) |
|---|---|
| DP1 | about 0.5 |
| DP2 | about 2.7 |
| DP3 | about 4.3 |
| DP4 | about 3.7 |
| DP5 | about 3.1 |
| DP6 | about 5.0 |
| DP7 | about 7.1 |
| DP8 | about 4.5 |
| DP9 | about 3.1 |
| DP10 | about 1.6 |
| DP (higher than 10) | about 64 |

36. A process for preparing a salt-substitute composition according to any one of claims 1 to 35, said process comprising uniformly admixing potassium chloride and maltodextrin and, optionally, sodium chloride and/or cream of tartar, the admixed amounts being such that the dextrose equivalent (D.E.) of the admixture is not more than 10 D.E. units.

**Claims for the Contracting State: AT**

1. A process for the manufacture of a salt substitute composition which is characterised in that it comprises forming into a uniform admixture particulate components comprising:
(a) potassium chloride, and
(b) maltodextrin,
wherein the dextrose equivalent (D.E.) of the mixture is not more than 10 D.E. units.

2. A process according to claim 1, characterised in that it comprises forming into a uniform admixture particulate components which consist essentially of:

17

**0 130 822**

(a) potassium chloride, and
(b) maltodextrin,

wherein the dextrose equivalent (D.E.) of the combined amount of potassium chloride and maltodextrin is not more than 10 D.E. units, and that the components are used in the percentage amounts set forth:

potassium chloride: from about 99 to about 60%, and
maltodextrin: from about 1 to about 40%,

wherein the percentage amounts are by weight based on the combined weight of said components.

3. A process according to claim 2, characterised in that the components are used in the percentage amounts set forth:

potassium chloride: from about 90 to about 70%, and
maltodextrin: from about 10 to about 30%.

4. A process according to claim 3, characterised in that the components are used in the percentage amounts set forth:

potassium chloride: from about 85 to about 80%, and
maltodextrin: from about 15 to about 20%.

5. A process according to claim 4, characterised in that the components are used in the percentage amounts set forth:

potassium chloride: about 80%, and
maltodextrin: about 20%.

6. A process according to any one of claims 2 to 5, characterised in that the average size of the potassium chloride particles is larger than the average size of the maltodextrin particles.

7. A process according to claim 6, characterised in that:

(a) the potassium chloride has a particle-size distribution such that about 100% of the potassium chloride will pass a 40-mesh (425 μm) screen and about 67% will be retained on a 100-mesh (150 μm) screen; and

(b) the maltodextrin has a particle-size distribution such that about 100% of the maltodextrin will pass a 40-mesh (425 μm) screen, about 97% will pass an 80-mesh (180 μm) screen and about 77% will pass an 80-mesh (180 μm) screen and be retained on a 325-mesh (45 μm) screen.

8. A process according to claim 1, characterised in that the particulate components of the uniform admixture comprise:

(a) potassium chloride,
(b) maltodextrin, and
(c) sodium chloride,

wherein the dextrose equivalent (D.E.) of the combined amount of potassium chloride, maltodextrin and sodium chloride is not more than 10 D.E. units, and that the components are used in the percentage amounts set forth:

potassium chloride: from about 91 to 19%,
maltodextrin: from about 1 to about 40%, and
sodium chloride: from about 0.1 to about 75%,

wherein the percentage amounts are by weight based on the combined weight of said components.

9. A process according to claim 8, characterised in that the components are used in the percentage amounts set forth:

potassium chloride: from about 91 to about 20%,
maltodextrin: from about 10 to about 30%, and
sodium chloride: from about 1 to about 50%.

10. A process according to claim 9, characterised in that the components are used in the percentage amounts set forth:

potassium chloride: from about 85 to about 65%,
maltodextrin: from about 15 to about 20%, and
sodium chloride: from about 3 to about 15%.

11. A process according to claim 8, characterised in that the amount of potassium chloride used is about 65%, the amount of maltodextrin used is about 20%, and the amount of sodium chloride used is about 15%.

12. A process according to claim 8, characterised in that the amount of potassium chloride used is about 72%, the amount of maltodextrin used is about 20% and the amount of sodium chloride used is about 8%.

13. A process according to any one of claims 8 to 12, characterised in that the average size of the potassium chloride particles is larger than both the average size of the maltodextrin particles and the average size of the sodium chloride particles.

14. A process according to claim 13, characterised in that:

(a) the potasssium chloride has a particle-size distribution such that about 100% of the potassium chloride will pass a 40-mesh (425 μm) screen and about 67% will be retained on a 100-mesh (150 μm) screen;

(b) the maltodextrin has a particle-size distribution such that about 100% of the maltodextrin will pass a

18

40-mesh (425 µm) screen, about 97% will pass an 80-mesh (180 µm) screen and about 77% will pass an 80-mesh (180 µm) screen and be retained on a 325-mesh (45 µm) screen; and

(c) the sodium chloride has a particle-size distribution such that about 99.9% of the sodium chloride will pass a 60-mesh (250 µm) screen, about 99.5 will pass an 80-mesh (180 µm) screen and about 82.4% will pass an 80-mesh (180 µm) screen and be retained on a 200-mesh (75 µm) screen.

15. A process according to claim 1, characterised in that the particulate components of the uniform admixture comprise:

(a) potassium chloride,

(b) maltodextrin,

(c) sodium chloride, and

(d) cream of tartar,

wherein the dextrose equivalent (D.E.) of the combined amount of potassium chloride, maltodextrin, sodium chloride and cream of tartar is not more than 10 D.E. units, and that the components are used in the percentage amounts set forth:

potassium chloride: from about 91 to 19%,

maltodextrin: from about 1 to about 40%,

sodium chloride: from about 0.1 to about 75% and

cream of tartar: from about 0.1 to about 0.9%,

wherein the percentage amounts are by weight based on the combined weight of said components.

16. A process according to claim 15, characterised in that the components are used in the percentage amounts set forth:

potassium chloride: from about 91 to about 20%,

maltodextrin: from about 10 to about 30%,

sodium chloride: from about 1 to about 50%, and

cream of tartar: from about 0.1 to about 0.7%.

17. A process according to claim 16, characterised in that the components are used in the percentage amounts set forth:

potassium chloride: from about 85 to about 65%,

maltodextrin: from about 15 to about 20%,

sodium chloride: from about 3 to about 15%, and

cream of tartar: from about 0.2 to about 0.5%.

18. A process according to claim 15, characterised in that the amount of potassium chloride used is about 71.67%, the amount of maltodextrin used is about 20%, the amount of sodium chloride used is about 8% and the amount of cream of tartar used is about 0.33%.

19. A process according to claim 15, characterised in that the amount of potassium chloride used is about 75.67%, the amount of maltodextrin used is about 20%, the amount of sodium chloride used is about 4% and the amount of cream of tartar used is about 0.33%.

20. A process according to any one of claims 15 to 19, characterised in that the average size of the potassium chloride particles is larger than each of the following: the average size of the maltodextrin particles, the average size of the sodium particles and the average size of the cream of tartar particles.

21. A process according to claim 20, characterised in that:

(a) the potassium chloride has a particle-size distribution such that about 100% of the potassium chloride will pass a 40-mesh (425 µm) screen and about 67% will be retained on a 100-mesh (150 µm) screen;

(b) the maltodextrin has a particle-size distribution such that about 100% of the maltodextrin will pass a 40-mesh (425 µm) screen, about 97% will pass an 80-mesh (180 µm) screen and about 77% will pass an 80-mesh (180 µm) screen and be retained on a 325-mesh (45 µm) screen;

(c) the sodium chloride has a particle-size distribution such that about 99.9% of the sodium chloride will pass a 60-mesh (250 µm) screen, about 99.5% will pass an 80-mesh (180 µm) screen and be retained on a 200-mesh (75 µm) screen; and

(d) the cream of tartar has a particle-size distribution such that about 100% of the cream of tartar will pass a 170-mesh (90 µm) screen, about 96.7% will pass a 230-mesh (63 µm) screen and about 16% will pass a 230-mesh (63 µm) screen and be retained on a 400-mesh (38 µm) screen.

22. A process according to claim 1, characterised in that the particulate components of the uniform admixture comprise:

(a) potassium chloride,

(b) maltodextrin, and

(c) cream of tartar,

said admixture being free of sodium chloride, wherein the dextrose equivalent (D.E.) of the combined amount of potassium chloride, maltodextrin and cream of tartar is not more than 10 D.E. units, and that the components are used in the percentage amounts set forth:

potassium chloride: from about 99 to about 59%,

maltodextrin: from about 1 to about 40%, and

cream of tartar: from about 0.1 to about 0.9%,

wherein the percentage amounts are by weight based on the combined weight of said components.

23. A process according to claim 22, characterised in that the components are used in the percentage amounts set forth:

potassium chloride: from about 91 to about 69%,

maltodextrin: from about 10 to about 30%, and

cream of tartar: from about 0.1 to about 0.7%.

24. A process according to claim 23, characterised in that the components are used in the percentage amounts set forth:

potassium chloride: from about 85 to about 79%,

maltodextrin: from about 15 to about 20%, and

cream of tartar: from about 0.1 to about 0.5%.

25. A process according to claim 24, characterised in that the components are used in the percentage amounts set forth:

potassium chloride: about 79.6%,

maltodextrin: about 20%, and

cream of tartar: about 0.4%.

26. A process according to any one of claims 22 to 25, characterised in that the average size of the potassium chloride particles is larger than both the average size of the maltodextrin particles and the average size of the cream of tartar particles.

27. A process according to claim 26, characterised in that:

(a) the potassium chloride has a particle-size distribution such that about 100% of the potassium chloride will pass a 40-mesh (425 μm) screen and about 67% will be retrained on a 100-mesh (150 μm) screen:

(b) the maltodextrin has a particle-size distribution such that about 100% of the maltodextrin will pass a 40-mesh (425 μm) screen, about 97% will pass an 80-mesh (180 μm) screen and about 77% will pass an 80-mesh (180 μm) screen and be retained on a 325-mesh (45 μm) screen; and

(c) the cream of tartar has a particle-size distribution such that about 100% of the cream of tartar will pass a 170-mesh (90 μm) screen, about 96.7 will pass a 230-mesh (63 μm) screen and about 16% will pass a 230-mesh (63 μm) screen and be retained on a 400-mesh (38 μm) screen.

28. A process according to any one of claims 1 to 27, characterised in that the particulate components are mixed so that the resulting admixture is homogeneous.

29. A process according to any one of claims 1 to 28, characterised in that the maltodextrin has a D.E. in the range from about 5 to about 20 D.E. units.

30. A process according to claim 29, characterised in that said maltodextrin has a D.E. in the range from about 5 to 15 D.E. units.

31. A process according to claim 30, characterised in that said maltodextrin has a D.E. in the range from about 9 to about 12 D.E. units.

32. A process according to any one of claims 1 to 31, characterised in that said maltodextrin is a water-soluble maltodextrin including as at least a major portion thereof one or more polysaccharides having a degree of polymerisation (D.P.) of at least 10.

33. A process according to any one of claims 1 to 32, characterised in that said maltodextrin is a starch hydrolyzate.

34. A process according to any one of claims 1 to 33, characterised in that said maltodextrin has the following saccharide content as determined by high performance liquid chromatography:

| Saccharides—by degree of polymerization | Amount | |
|---|---|---|
| | From about (%) | To about (%) |
| DP1 | 0.3 | 0.8 |
| DP2 | 2.3 | 2.9 |
| DP3 | 4.2 | 5.0 |
| DP4 | 3.3 | 4.1 |
| DP5 | 2.7 | 3.4 |
| DP6 | 0.7 | 6.0 |
| DP7 | 6.5 | 8.3 |
| DP8 | 4.2 | 5.3 |
| DP9 | 2.8 | 3.6 |
| DP10 | 0.6 | 2.9 |
| DP (higher than 10) | 57 | 68 |

35. A process according to claim 34, characterised in that said saccharide content is as follows:

| Saccharides—by degree of polymerization | Amount (%) |
|---|---|
| DP1 | about 0.5 |
| DP2 | about 2.7 |
| DP3 | about 4.3 |
| DP4 | about 3.7 |
| DP5 | about 3.1 |
| DP6 | about 5.0 |
| DP7 | about 7.1 |
| DP8 | about 4.5 |
| DP9 | about 3.1 |
| DP10 | about 1.6 |
| DP (higher than 10) | about 64 |

**Patentansprüche für die Vertragsstaaten: BE, CH, DE, FR, GB, IT, LI, LU, NL, SE**

1. Salzersatzpräparat aus einem gleichmäßigen Gemisch, das als seine teilchenförmigen Bestandteile
   (a) Kaliumchlorid und
   (b) Maltodextrin
enthält, wobei das Dextrose-Äquivalent (D.E.) des Gemisches nicht mehr als 10 D.E.-Einheiten beträgt.

2. Präparat nach Anspruch 1, bei dem das gleichmäßige Gemisch als seine teilchenförmigen Bestandteile im wesentlichen aus
   (a) Kaliumchlorid und
   (b) Maltodextrin
besteht, wobei das Dextrose-Äquivalent (D.E.) der vereinigten Menge von Kaliumchlorid und Maltodextrin nicht mehr als 10 D.E.-Einheiten beträgt und die Bestandteile in den angegebenen prozentualen Mengen vorliegen:

Kaliumchlorid: von etwa 99 bis etwa 60% und

Maltodextrin: von etwa 1 bis etwa 40%,

wobei die prozentualen Mengen Gewichtsprozente bezogen auf das kombinierte Gewicht dieser Bestandteile sind.

3. Präparat nach Anspruch 2, bei dem die Bestandteile in den angegebenen prozentualen Mengen vorliegen:

Kaliumchlorid: von etwa 90 bis etwa 70% und

Maltodextrin: von etwa 10 bis etwa 30%.

4. Präparat nach Anspruch 3, bei dem die Bestandteile in den angegebenen prozentualen Mengen vorliegen:

Kaliumchlorid: von etwa 85 bis 80% und

Maltodextrin: von etwa 15 bis etwa 20%.

5. Präparat nach Anspruch 4, bei dem die Bestandteile in den angegebenen Prozentmengen vorliegen:

Kaliumchlorid: etwa 80% und

Maltodextrin: etwa 20%.

6. Präparat nach einem der Ansprüche 2 bis 5, bei dem die mittlere Größere der Kaliumchlorid-Teilchen größer als die mittlere Größe der Maltodextrin-Teilchen ist.

7. Präparat nach Anspruch 6, bei dem

(a) das Kaliumchlorid eine solche Teilchengrößenverteilung hat, daß etwa 100% des Kaliumchlorids ein 40-Maschen-Sieb (425 µm) passieren und etwa 67% auf einem 100-Maschen-Sieb (150 µm) zurückgehalten werden und

(b) das Maltodextrin eine solche Teilchengrößenverteilung hat, daß etwa 100% des Maltodextrins ein 40-Maschen-Sieb (425 µm) passieren, etwa 97% ein 80-Maschen-Sieb (180 µm) passieren und etwa 77% ein 80-Maschen-Sieb (180 µm) passieren und auf einem 325-Maschen-Sieb (45 µm) zurückgehalten werden.

8. Präparat nach Anspruch 1, bei dem das gleichmäßige Gemisch als seine teilchenförmigen Bestandteile

(a) Kaliumchlorid,

(b) Maltodextrin und

(c) Natriumchlorid

enthält, wobei das Dextrose-Äquivalent (D.E.) der vereinigten Menge des Kaliumchlorids, Maltodextrins und Natriumchlorids nicht mehr als 10 D.E.-Einheiten beträgt und die Bestandteile in den angegebenen Prozentmengen vorliegen:

Kaliumchlorid: von etwa 91 bis etwa 19%,

Maltodextrin: von etwa 1 bis etwa 40% und

Natriumchlorid: von etwa 0,1 bis etwa 75%,

wobei die Prozentmengen Gewichtsprozente sind, bezogen auf die Gewichtssumme der genannten Bestandteile.

9. Präparat nach Anspruch 8, bei dem die Bestandteile in den angegebenen Prozentmengen vorliegen:

Kaliumchlorid: von etwa 19 bis etwa 20%,

Maltodextrin: von etwa 10 bis etwa 30%, und

Natriumchlorid: von etwa 1 bis etwa 50%.

10. Präparat nach Anspruch 9, bei dem die Bestandteile in den angegebenen Prozentmengen vorliegen:

Kaliumchlorid: von etwa 85 bis 65%,

Maltodextrin: von etwa 15 bis etwa 20%, und

Natriumchlorid: von etwa 3 bis etwa 15%.

11. Präparat nach Anspruch 8, bei dem die Menge des Kaliumchlorids etwa 65%, die Menge des Maltodextrins etwa 20% und die Menge des Natriumchlorids etwa 15% beträgt.

12. Präparat nach Anspruch 8, bei dem die Menge des Kaliumchlorids etwa 72%, die Menge des Maltodextrins etwa 20% und die Menge des Natriumchlorids etwa 8% beträgt.

13. Präparat nach einem der Ansprüche 8 bis 12, bei dem die mittlere Größe der Kaliumchlorid-Teilchen größer als die mittlere Größe der Maltodextrin-Teilchen und die mittlere Größe der Natriumchlorid-Teilchen ist.

14. Präparat nach Anspruch 13, bei dem

(a) das Kaliumchlorid eine solche Teilchengrößenverteilung hat, daß etwa 100% des Kaliumchlorids durch ein 40-Maschen-Sieb (425 µm) hindurchgehen und etwa 67% auf einem 100-Maschen-Sieb (150 µm) zurückgehalten werden,

(b) das Maltodextrin eine solche Teilchengrößenverteilung hat, daß etwa 100% des Maltodextrins durch ein 40-Maschen-Sieb (425 µm) hindurchgehen, etwa 97% durch ein 80-Maschen-Sieb (180 µm) hindurchgehen und etwa 77% durch ein 80-Maschen-Sieb (180 µm) hindurchgehen und auf einem 325-Maschen-Sieb (45 µm) zurückgehalten werden, und

(c) das Natriumchlorid eine solche Teilchengrößenverteilung hat, daß etwa 99,9% des Natriumchlorids durch ein 60-Maschen-Sieb (250 µm) hindurchgehen, etwa 99,5% durch ein 80-Maschen-Sieb (180 µm) hindurchgehen und etwa 82,4% durch ein 80-Maschen-Sieb (180 µm) hindurchgehen und auf einem 200-Maschen-Sieb (75 µm) zurückgehalten werden.

15. Präparat nach Anspruch 1, bei dem das gleichmäßige Gemisch als seine teilchenförmigen Bestandteile

(a) Kaliumchlorid,
(b) Maltodextrin,
(c) Natriumchlorid und
(d) Kaliumbitartrat

enthält, wobei das Dextrose-Äquivalent (D.E.) der vereinigten Menge des Kaliumchlorids, Maltodextrins, Natriumchlorids und Kaliumbitartrats nicht mehr als 10 D.E.-Einheiten beträgt und die Bestandteile in den angegebenen Prozentmengen vorliegen:

Kaliumchlorid: von etwa 91 bis 19%,
Maltodextrin: von etwa 1 bis etwa 40%,
Natriumchlorid: von etwa 0,1 bis etwa 75% und
Kaliumbitartrat: von etwa 0,1 bis etwa 0,9%,

wobei die Prozentmengen Gewichtsprozente bezogen auf die Gewichtssumme der genannten Bestandteile sind.

16. Präparat nach Anspruch 15, bei dem die Bestandteile in den angegebenen Prozentmengen vorliegen:

Kaliumchlorid: von etwa 91 bis etwa 20%,
Maltodextrin: von etwa 10 bis etwa 30%,
Natriumchlorid: von etwa 1 bis etwa 50% und
Kaliumbitartrat: von etwa 0,1 bis etwa 0,7%.

17. Präparat nach Anspruch 16, bei dem die Bestandteile in den angegebenen Prozentmengen vorliegen:

Kaliumchlorid: von etwa 85 bis etwa 65%,
Maltodextrin: von etwa 15 bis etwa 20%,
Natriumchlorid: von etwa 3 bis etwa 15% und
Kaliumbitartrat: von etwa 0,2 bis etwa 0,5%.

18. Präparat nach Anspruch 15, bei dem die Menge des Kaliumchlorids etwa 71,67%, die Menge des Maltodextrins etwa 20%, die Menge des Natriumchlorids etwa 8% und die Menge des Kaliumbitartrats etwa 0,33% beträgt.

19. Präparat nach Anspruch 15, bei dem die Menge des Kaliumchlorids etwa 75,67%, die Menge des Maltodextrins etwa 20%, die Menge des Natriumchlorids etwa 4% und die Menge des Kaliumbitartrats etwa 0,33% beträgt.

20. Präparat nach einem der Ansprüche 15 bis 19, bei dem die mittlere Größe der Kaliumchlorid-Teilchen größer als jede der folgenden Größen ist: die mittlere Größe der Maltodextrin-Teilchen, die mittlere Größe der Natriumchlorid-Teilchen und die mittlere Größe der Kaliumbitartrat-Teilchen.

21. Präparat nach Anspruch 20, bei dem

(a) das Kaliumchlorid eine solche Teilchengrößenverteilung hat daß etwa 100% des Kaliumchlorids ein 40-Maschen-Sieb (425 µm) passieren und etwa 67% auf einem 100-Maschen-Sieb (150 µm) zurückgehalten werden,

(b) das Maltodextrin eine solche Teilchengrößenverteilung hat, daß etwa 100% des Maltodextrins ein 40-Maschen-Sieb (425 µm) passieren, etwa 97% ein 80-Maschen-Sieb (180 µm) passieren und etwa 77% ein 80-Maschen-Sieb (180 µm) passieren und auf einem 325-Maschen-Sieb (45 µm) zurückgehalten werden,

(c) das Natriumchlorid eine solche Teilchengrößenverteilung hat, daß etwa 99,9% des Natriumchlorids ein 60-Maschen-Sieb (250 µ) passieren, etwa 99,5% ein 80-Maschen-Sieb (180 µm) passieren und etwa 82,4% ein 80-Maschen-Sieb (180 µm) passieren und auf einem 200-Maschen-Sieb (75 µm) zurückgehalten werden, und

(d) das Kaliumbitartrat eine solche Teilchengrößenverteilung hat, daß etwa 100% des Kaliumbitartrats ein 170-Maschen-Sieb (90 µm) passieren, etwa 96,7% ein 230-Maschen-Sieb (63 µm) passieren und etwa 16% ein 230-Maschen-Sieb (63 µm) passieren und auf einem 400-Maschen-Sieb (38 µm) zurückgehalten werden.

22. Präparat nach Anspruch 1, bei dem das gleichmäßige Gemisch als seine teilchenförmigen Bestandteile

(a) Kaliumchlorid,
(b) Maltodextrin und
(c) Kaliumbitartrat

enthält und frein von Natriumchlorid ist, wobei das Dextrose-Äquivalent (D.E.) der vereinigten Mengen von Kaliumchlorid, Maltodextrin und Kaliumbitartrat nicht mehr als 10 D.E.-Einheiten beträgt und die Bestandteile in den angegebenen Prozentmengen vorliegen:

Kaliumchlorid: von etwa 99 bis etwa 59%,

Maltodextrin: von etwa 1 bis etwa 40%, und

Kaliumbitartrat: von etwa 0,1 bis etwa 0,9%,

wobei die Prozentmengen Gewichtsprozente bezogen auf die Summe der Gewichte der Bestandteile sind.

23. Präparat nach Anspruch 22, bei dem die Bestandteile in den angegebenen Prozentmengen vorliegen:

Kaliumchlorid: von etwa 91 bis etwa 69%,

Maltodextrin: von etwa 10 bis etwa 30% und

Kaliumbitartrat: von etwa 0,1 bis etwa 0,7%.

24. Präparat nach Anspruch 23, bei dem die Bestandteile in den angegebenen Prozentmengen vorliegen:

Kaliumchlorid: von etwa 85 bis etwa 79%,

Maltodextrin: von etwa 15 bis etwa 20% und

Kaliumbitartrat: von etwa 0,1 bis etwa 0,5%.

25. Präparat nach Anspruch 24, bei dem die Bestandteile in den angegebenen Prozentmengen vorliegen:

Kaliumchlorid: etwa 79,6%,

Maltodextrin: etwa 20% und

Kaliumbitartrat: etwa 0,4%.

26. Präparat nach einem der Ansprüche 22 bis 25, bei dem die mittlere Größe der Kaliumchlorid-Teilchen größer als die mittlere Größe der Maltodextrin-Teilchen und die mittlere Größe der Kaliumbitartrat-Teilchen ist.

27. Präparat nach Anspruch 26, bei dem

(a) das Kaliumchlorid eine solche Teilchengrößenverteilung hat, daß etwa 100% des Kaliumchlorids durch ein 40-Maschen-Sieb (425 µm) hindurchgehen und etwa 67% auf einem 100-Maschen-Sieb (150 µm) zurückgehalten werden,

(b) das Maltodextrin eine solche Teilchengrößenverteilung hat, daß etwa 100% des Maltodextrins durch ein 40%-Maschen-Sieb (425 µm) hindurchgehen, etwa 97% durch ein 80-Maschen-Sieb (180 µm) hindurchgehen und etwa 77% durch ein 80-Maschen-Sieb (180 µm) hindurchgehen und auf einem 325-Maschen-Sieb (45 µm) zurückgehalten werden, und

(c) das Kaliumbitartrat eine solche Teilchengrößenvertilung hat, daß etwa 100% des Kaliumbitartrats durch ein 170-Maschen-Sieb (90 µm) hindurchgehen, etwa 96,7% durch ein 230-Maschen-Sieb (63 µm) hindurchgehen und etwa 16% durch ein 230-Maschen-Sieb (63 µm) hindurchgehen und auf einem 400-Maschen-Sieb (38 µm) zurückgehalten werden.

28. Präparat nach einem der Ansprüche 1 bis 27, bei dem das Gemisch homogen ist.

29. Präparat nach einem der Ansprüche 1 bis 28, bei dem das Maltodextrin ein D.E. in dem Bereich von etwa 5 bis etwa 20 D.E.-Einheiten hat.

30. Präparat nach Anspruch 29, bei dem das Maltodextrin ein D.E. in dem Bereich von etwa 5 bis etwa 15 D.E.-Einheiten hat.

31. Präparat nach Anspruch 30, bei dem das Maltodextrin ein D.E. in dem Bereich von etwa 9 bis etwa 12 D.E.-Einheiten hat.

32. Präparat nach einem der Ansprüche 1 bis 31, bei dem das Maltodextrin ein wasserlösliches Maltodextrin ist, das als wenigstens seinen größeren Anteil ein oder mehrere Polysaccharide mit einem Polymerisationsgrad (D.P.) von wenigstens 10 enthält.

33. Präparat nach einem der Ansprüche 1 bis 32, bei dem das Maltodextrin ein Stärkehydrolysat ist.

34. Präparat nach einem der Ansprüche 1 bis 33, bei dem das Maltodextrin nach Bestimmung durch Hochleistungsflüssigkeitschromatographie den folgenden Saccharid-Gehalt hat:

| Saccharide—nach Polymerisationsgrad | Menge | |
| --- | --- | --- |
| | von etwa (%) | bis etwa (%) |
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,9 |
| DP (höher als 10) | 57 | 68 |

35. Präparat nach Anspruch 34, bei dem der Saccharid-Gehalt wie folgt ist:

| Saccharide—nach Polymerisationsgrad | Menge (%) |
| --- | --- |
| DP1 | etwa 0,5 |
| DP2 | etwa 2,7 |
| DP3 | etwa 4,3 |
| DP4 | etwa 3,7 |
| DP5 | etwa 3,1 |
| DP6 | etwa 5,0 |
| DP7 | etwa 7,1 |
| DP8 | etwa 4,5 |
| DP9 | etwa 3,1 |
| DP10 | etwa 1,6 |
| DP (höher als 10 | etwa 64 |

36. Verfahren zur Herstellung eines Salzersatz-Präparats gemäß einem der Ansprüche 1 bis 35, bei dem man Kaliumchlorid und Maltodextrin und wahlweise Natriumchlorid und/oder Kaliumbitartrat gleichmäßig mischt, wobei die gemischten Mengen so sind, daß das Dextrose-Äquivalent (D.E.) des Gemisches nicht mehr als 10 D.E.-Einheiten beträgt.

**Patentansprüche für den Vertragsstaat: AT**

1. Verfahren zur Herstellung eines Salzersatz-Präparats, dadurch gekennzeichnet, daß man aus teilchenförmigen Bestandteilen, die
    (a) Kaliumchlorid und
    (b) Maltodextrin

**0 130 822**

enthalten, ein gleichmäßiges Gemisch bildet, dessen Dextrose-Äquivalent (D.E.) nicht mehr als 10 D.E.-Einheiten beträgt.

. 2. Verfahren nach Anspruch 1, dadurch gekennzeichnet, daß man aus teilchenförmigen Bestandteilen, die im wesentlichen aus

(a) Kaliumchlorid und
(b) Maltodextrin

bestehen, ein gleichmäßiges Gemisch bildet, wobei das Dextrose-Äquivalent (D.E.) der vereinigten Mengen des Kaliumchlorids und Maltodextrins nicht mehr als 10 D.E.-Einheiten beträgt und daß man die Bestandteile in den angegebenen Prozentmengen einsetzt:

Kaliumchlorid: von etwa 99 bis etwa 60% und
Maltodextrin: von etwa 1 bis etwa 40%,

wobei die Prozentmengen Gewichtsprozente bezogen auf die Gewichtssumme der genannten Bestandteile sind.

3. Verfahren nach Anspruch 2, dadurch gekennzeichnet, daß man die Bestandteile in den angegebenen Prozentmengen einsetzt:

Kaliumchlorid: von etwa 90 bis etwa 70%, und
Maltodextrin: von etwa 10 bis etwa 30%.

4. Verfahren nach Anspruch 3, dadurch gekennzeichnet, daß man die Bestandteile in den angegebenen Prozentmengen einsetzt:

Kaliumchlorid: von etwa 85 bis etwa 80% und
Maltodextrin: von etwa 15 bis etwa 20%.

5. Verfahren nach Anspruch 4, dadurch gekennzeichnet, daß man die Bestandteile in den angegebenen Prozentmengen einsetzt:

Kaliumchlorid: etwa 80% und
Maltodextrin: etwa 20%.

6. Verfahren nach einem der Ansprüche 2 bis 5, dadurch gekennzeichnet, daß die mittlere Größe der Kaliumchlorid-Teilchen größer als die mittlere Größe der Maltodextrin-Teilchen ist.

7. Verfahren nach Anspruch 6, dadurch gekennzeichnet, daß

(a) das Kaliumchlorid eine solche Teilchengrößenverteilung hat, daß etwa 100% des Kaliumchlorids durch ein 40-Maschen-Sieb (425 µm) hindurchgehen und etwa 67% auf einem 100-Maschen-Sieb (150 µm) zurückgehalten werden, und

(b) das Maltodextrin eine solche Teilchengrößenvertilung hat, daß etwa 100% des Maltodextrins durch ein 40-Maschen-Sieb (425 µm) hindurchgehen, etwa 97% durch ein 80-Maschen-Sieb (180 µm) hindurchgehen und etwa 77% durch ein 80-Maschen-Sieb (180 µm) hindurchgehen und auf einem 325-Maschen-Sieb (45 µm) zurückgehalten werden.

8. Verfahren nach Anspruch 1, dadurch gekennzeichnet, daß die teilchenförmigen Bestandteile des gleichmäßigen Gemisches

(a) Kaliumchlorid,
(b) Maltodextrin und
(c) Natriumchlorid

umfassen, wobei das Dextrose-Äquivalent D.E. der vereinigten Mengen aus Kaliumchlorid, Maltodextrin und Natriumchlorid nicht mehr also 10 D.E.-Einheiten beträgten und daß die Bestandteile in den angegebenen Prozentmengen eingesetzt werden:

Kaliumchlorid: von etwa 91 bis 19%,
Maltodextrin: von etwa 1 bis etwa 40% und
Natriumchlorid: von etwa 0,1 bis etwa 75%,

wobei die Prozentmengen Gewichtsprozente bezogen auf die Gewichtssumme dieser Komponenten sind.

9. Verfahren nach Anspruch 8, dadurch gekennzeichnet, daß man die Bestandteile in den angegebenen Prozentmengen einsetzt:

Kaliumchlorid: von etwa 91 bis etwa 20%,
Maltodextrin: von etwa 10 bis etwa 30% und
Natriumchlorid: von etwa 1 bis etwa 50%.

10. Verfahren nach Anspruch 9, dadurch gekennzeichnet, daß man die Bestandteile in den angegebenen Prozentmengen einsetzt:

Kaliumchlorid: von etwa 85 bis etwa 65%,
Maltodextrin: von etwa 15 bis etwa 20% und
Natriumchlorid: von etwa 3 bis etwa 15%.

11. Verfahren nach Anspruch 8, dadurch gekennzeichnet, daß die eingesetzte Menge Kaliumchlorid etwa 65%, die eingesetzte Menge Maltodextrin etwa 20% und die eingesetzte Menge Natriumchlorid etwa 15% beträgt.

12. Verfahren nach Anspruch 8, dadurch gekennzeichnet, daß die eingesetzte Menge Kaliumchlorid etwa 72%, die eingesetzte Menge Maltodextrin etwa 20% und die eingesetzte Menge Natriumchlorid etwa 8% beträgt.

13. Verfahren nach einem der Ansprüche 8 bis 12, dadurch gekennzeichnet, daß die mittlere Größe der

26

**0 130 822**

Kaliumchlorid-Teilchen größer als die mittlere Größe der Maltodextrin-Teilchen und die mittlere Größe der Natriumchlorid-Teilchen ist.

14. Verfahren nach Anspruch 13, dadurch gekennzeichnet, daß,

(a) das Kaliumchlorid eine solche Teilchengrößenverteilung hat, daß etwa 100% des Kaliumchlorids durch ein 40-Maschen-Sieb (425 µm) hindurchgehen und etwa 67% auf einem 100-Maschen-Sieb (150 µm) zurückgehalten werden,

(b) das Maltodextrin eine solche Teilchengrößenverteilung hat, daß etwa 100% des Maltodextrins durch ein 40-Maschen-Sieb (425 µm) hindurchgehen, etwa 97% durch ein 80-Maschen-Sieb (180 µm) hindurchgehen und etwa 77% durch ein 80-Maschen-Sieb (180 µm) hindurchgehen und auf einem 325-Maschen-Sieb (45 µm) zurückgehalten werden, und

(c) das Natriumchlorid eine solche Teilchengrößenverteilung hat, daß etwa 99,9% des Natriumchlorids durch ein 60-Maschen-Sieb (250 µm) hindurchgehen, etwa 99,5% durch ein 80-Maschen-Sieb (180 µm) hindurchgehen und etwa 82,4% durch ein 80-Maschen-Sieb (180 µm) hindurchgehen und auf einem 200-Maschen-Sieb (75 µm) zurückgehalten werden.

15. Verfahren nach Anspruch 1, dadurch gekennzeichnet, daß die teilchenförmigen Bestandteile des gleichmäßigen Gemisches

(a) Kaliumchlorid,

(b) Maltodextrin,

(c) Natriumchlorid und

(d) Kaliumbitartrat

aufweisen, wobei das Dextrose-Äquivalent (D.E.) der vereinigten Mengen aus Kaliumchlorid, Maltodextrin, Natriumchlorid und Kaliumbitartrat nicht mehr als 10 D.E.-Einheiten beträgt, und daß man die Bestandteile in den angegebenen Prozentmengen einsetzt:

Kaliumchlorid: von etwa 91 bis 19%,

Maltodextrin: von etwa 1 bis etwa 40%,

Natriumchlorid: von etwa 0,1 bis etwa 75%, und

Kaliumbitartrat: von etwa 0,1 bis etwa 0,9%, wobei die Prozentmengen Gewichtsprozente bezogen auf die Gewichtssumme der genannten Bestandteile sind.

16. Verfahren nach Anspruch 15, dadurch gekennzeichnet, daß man die Bestandteile in den angegebenen Prozentmengen einsetzt:

Kaliumchlorid: von etwa 91 bis etwa 20%,

Maltodextrin: von etwa 10 bis etwa 30%,

Natriumchlorid: von etwa 1 bis etwa 30% und

Kaliumbitartrat: von etwa 0,1 bis etwa 0,7%.

17. Verfahren nach Anspruch 16, dadurch gekennzeichnet, daß man die Bestandteile in den angegebenen Prozentmengen einsetzt:

Kaliumchlorid: von etwa 85 bis etwa 65%,

Maltodextrin: von etwa 15 bis etwa 20%,

Natriumchlorid: von etwa 3 bis etwa 15% und

Kaliumbitartrat: von etwa 0,2 bis etwa 0,5%.

18. Verfahren nach Anspruch 15, dadurch gekennzeichnet, daß die eingesetzte Menge Kaliumchlorid etwa 71,67%, die eingesetzte Menge Maltodextrin etwa 20%, die eingesetzte Menge Natriumchlorid etwa 8% und die eingesetzte Menge Kaliumbitartrat etwa 0,33% beträgt.

19. Verfahren nach Anspruch 15, dadurch gekennzeichnet, daß die eingesetzte Menge Kaliumchlorid etwa 75,67%, die eingesetzte Menge Maltodextrin etwa 20%, die eingesetzte Menge Natriumchlorid etwa 4% und die eingesetzte Menge Kaliumbitartrat etwa 0,33% beträgt.

20. Verfahren nach einem der Ansprüche 15 bis 19, dadurch gekennzeichnet, daß die mittlere Größe der Kaliumchlorid-Teilchen größer als jede der folgenden Größen ist; die mittlere Größere der Maltodextrin-Teilchen, die mittlere Größe der Natriumchlorid-Teilchen und die mittlere Größe der Kaliumbitartrat-Teilchen.

21. Verfahren nach Anspruch 20, dadurch gekennzeichnet, daß

(a) das Kaliumchlorid eine solche Teilchengrößenverteilung hat, daß etwa 100% des Kaliumchlorids durch ein 40-Maschen-Sieb (425 µm) hindurchgehen und etwa 67% auf einem 100-Maschen-Sieb (150 µm) zurückgehalten werden,

(b) das Maltodextrin eine solche Teilchengrößenverteilung hat, daß etwa 100% des Maltodextrins durch ein 40%-Maschen-Sieb (425 µm) hindurchgehen, etwa 97% durch ein 80-Maschen-Sieb (180 µm) hindurchgehen und etwa 77% durch ein 80-Maschen-Sieb hindurchgehen und auf einem 325-Maschen-Sieb (45 µm) zurückgehalten werden,

(c) das Natriumchlorid eine solche Teilchengrößenverteilung hat, daß etwa 99,9% des Natriumchlorids durch ein 40-Maschen-Sieb (250 µm) hindurchgehen, etwa 99,5% durch ein 80-Maschen-Sieb (180 µm) hindurchgehen und auf einem 200-Maschen-Sieb (75 µm) zurückgehalten werden, und

(d) das Kaliumbitartrat eine solche Teilchengrößenverteilung hat, daß etwa 100% des Kaliumbitartrats durch ein 170-Maschen-Sieb (90 µm) hindurchgehen, etwa 96,7% durch ein 230-Maschen-Sieb (63 µm) hindurchgehen und etwa 16% durch ein 230-Maschen-Sieb (63 µm) hindurchgehen und auf einem 400-Maschen-Sieb-(38 µm) zurückgehalten werden.

27

22. Verfahren nach Anspruch 1, dadurch gekennzeichnet, daß die teilchenförmigen Bestandteile des gleichmäßigen Gemisches

    (a) Kaliumchlorid,

    (b) Maltodextrin und

    (c) Kaliumbitartrat aufweisen und das Gemisch frei von Natriumchlorid ist, wobei das Dextrose-Äquivalent (D.E.) der vereinigten Mengen von Kaliumchlorid, Maltodextrin und Kaliumbitartrat nicht mehr als 10 D.E.-Einheiten beträgt, und daß die Bestandteile in den angegebenen Prozentmengen eingesetzt werden:

    Kaliumchlorid: von etwa 99 bis etwa 59%,

    Maltodextrin: von etwa 1 bis etwa 40% und

    Kaliumbitartrat: von etwa 0,1 bis etwa 0,9%,

wobei die Prozentmengen Gewichtsprozente bezogen auf die Gewichtssumme der genannten Bestandteile sind.

23. Verfahren nach Anspruch 22, dadurch gekennzeichnet, daß man die Bestandteile in den angegebenen Prozentmengen einsetzt:

    Kaliumchlorid: von etwa 91 bis etwa 69%,

    Maltodextrin: von etwa 10 bis etwa 30% und

    Kaliumbitartrat: von etwa 0,1 bis etwa 0,7%.

24. Verfahren nach Anspruch 23, dadurch gekennzeichnet, daß man die Bestandteile in den angegebenen Prozentmengen einsetzt:

    Kaliumchlorid: von etwa 85 bis etwa 79%,

    Maltodextrin: von etwa 15 bis etwa 20% und

    Kaliumbitartrat: von etwa 0,1 bis etwa 0,5%.

25. Verfahren nach Anspruch 24, dadurch gekennzeichnet, daß man die Bestandteile in den angegebenen Prozentmengen einsetzt:

    Kaliumchlorid: etwa 79,6%,

    Maltodextrin: etwa 20% und

    Kaliumbitartrat: etwa 0,4%.

26. Verfahren nach irgendeinem der Ansprüche 22 bis 25, dadurch gekennzeichnet, daß die mittlere Größe der Kaliumchlorid-Teilchen größer als die mittlere Größe der Maltodextrin-Teilchen und die mittlere Größe der Kaliumbitartrat-Teilchen ist.

27. Verfahren nach Anspruch 26, dadurch gekennzeichnet, daß,

    (a) das Kaliumchlorid eine solche Teilchengrößenverteilung hat, daß etwa 100% des Kaliumchlorids durch ein 40-Maschen-Sieb (425 µm) hindurchgehen und etwa 67% auf einem 100-Maschen-sieb (150 µm) zurückgehalten werden,

    (b) das Maltodextrin eine solche Teilchengrößenverteilung hat, daß etwa 100% des Maltodextrins durch ein 40-Maschen-Sieb (425 µm) hindurchgehen, etwa 97% durch ein 80-Maschen-Sieb (180 µm) hindurchgehen und etwa 77% durch ein 80-Maschen-Sieb (180 µm) hindurchgehen und auf einem 325-Maschen-Sieb (45 µm) zurückgehalten werden, und

    (c) das Kaliumbitartrat eine solche Teilchengrößenverteilung hat, daß etwa 100% des Kaliumbitartrats durch ein 170-Maschen-Sieb (90 µm) hindurchgehen, etwa 96,7% durch ein 230-Maschen-Sieb (63 µm) hindurchgehen und etwa 16% durch ein 230-Maschen-Sieb (63 µm) hindurchgehen und auf einem 40-Maschen-Sieb (38 µm) zurückgehalten werden.

28. Verfahren nach einem der Ansprüche 1 bis 27, dadurch gekennzeichnet, daß die teilchenförmigen Bestandteile so gemischt werden, daß das entstehende Gemisch homogen ist.

29. Verfahren nach einem der Ansprüche 1 bis 28, dadurch gekennzeichnet, daß das Maltodextrin ein D.E. in dem Bereich von etwa 5 bis etwa 20 D.E.-Einheiten hat.

30. Verfahren nach Anspruch 29, dadurch gekennzeichnet, daß das Maltodextrin ein D.E. in dem Bereich von etwa 5 bis 15 D.E.-Einheiten hat.

31. Verfahren nach Anspruch 30, dadurch gekennzeichnet, daß das Maltodextrin ein D.E. in dem Bereich von etwa 9 bis etwa 12 D.E.-Einheiten hat.

32. Verfahren nach einem der Ansprüche 1 bis 31, dadurch gekennzeichnet, daß das Maltodextrin ein wasserlösliches Maltodextrin ist, das als wenigstens seinen größeren Teil ein oder mehrere Polysaccharide mit einem Polymerisationsgrad (D.P.) von wenigstens 10 enthält.

33. Verfahren nach einem der Ansprüche 1 bis 32, dadurch gekennzeichnet, daß das Maltodextrin ein Stärke-Hydrolysat ist.

34. Verfahren nach einem der Ansprüche 1 bis 33, dadurch gekennzeichnet, daß das Maltodextrin den folgenden, durch Hochleistungsflüssigkeitschromatographie bestimmten Saccharid-Gehalt hat:

# 0 130 822

| Saccharide—nach polymerisationsgrad | Menge von etwa (%) | bis etwa (%) |
|---|---|---|
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,9 |
| DP (höher als 10) | 57 | 68 |

35. Verfahren nach Anspruch 34, dadurch gekennzeichnet, daß der Saccharid-Gehalt wie folgt ist:

| Saccharide—nach polymerisationsgrad | Menge (%) |
|---|---|
| DP1 | etwa 0,5 |
| DP2 | etwa 2,7 |
| DP3 | etwa 4,3 |
| DP4 | etwa 3,7 |
| DP5 | etwa 3,1 |
| DP6 | etwa 5,0 |
| DP7 | etwa 7,1 |
| DP8 | etwa 4,5 |
| DP9 | etwa 3,1 |
| DP10 | etwa 1,6 |
| DP (höher als 10) | etwa 64 |

**Revendications Pour les Etats Contractants: BE, CH, DE, FR, GB, IT, LI, LU, NL, SE**

1. Composition de substitution du sel qui comprend un mélange uniforme contenant, comme ses composants en particules:
   (a) du chlorure de potassium, et
   (b) une maltodextrine,
où l'équivalent en dextrose (ED) du mélange n'est pas supérieur à 10 unités ED.
2. Composition selon la revendication 1 dans laquelle le mélange uniforme comprend essentiellement comme ses composants en particules:
   (a) du chlorure de potassium, et
   (b) une maltodextrine,

29

**0 130 822**

dans laquelle l'équivalent en dextrose (ED) de la quantité combinée de chlorure de potassium et de maltodextrine n'est pas supérieur à 10 unités ED et les composants sont présents en les pourcentages indiqués:

Chlorure de potassium: d'environ 99 à environ 60%, et

Maltodextrine: d'environ 1 à environ 40%,

les pourcentages étant en poids par rapport au point combiné desdits composants.

3. Composition selon la revendication 2 dans laquelle les composants sont présents en les pourcentages indiqués: chlorure de potassium: d'envirion 90 à environ 70%, et

maltodextrine: d'environ 10 à environ 30%.

4. Composition selon la revendication 3 dans laquelle les composants sont présents en les pourcentages indiqués;

chlorure de potassium: d'environ 85 à environ 80%, et

maltodextrine: d'environ 15 à environ 20%.

5. Composition selon la revendication 4 dans laquelle les composants sont présents en les pourcentages indiqués:

chlorure de potassium: environ 80%, et

maltodextrine: environ 20%.

6. Composition selon l'une quelconque des revendications 2 à 5 dans laquelle la granulométrie moyenne des particules de chlorure de potassium est supérieure à la granulométrie moyenne des particules de maltodextrine.

7. Composition selon la revendication 6 dans laquelle:

(a) le chlorure de potassium a une distribution granulométrique telle qu'environ 100% du chlorure de potassium passent à travers un tamis de 40 mesh (425 µm) et environ 67% sont retenus sur un tamis de 100 mesh (150 µm), et

(b) la maltodextrine a une distribution granulométrique telle qu'environ 100% de la maltodextrine passent à travers un tamis de 40 mesh (425 µm), environ 97% passent à travers un tamis de 80 mesh (180 µm) et environ 77% passent à travers un tamis de 80 mesh (180 µm) et son retenus sur un tamis de 325 mesh (45 µm).

8. Composition selon la revendication 1 dans laquelle le mélange uniforme comprend comme ses composants en particules:

(a) du chlorure de potassium,

(b) une maltodextrine, et

(c) du chlorure de sodium,

dans laquelle l'équivalent en dextrose (ED) de la quantité combinée de chlorure de potassium, de maltodextrine et de chlorure de sodium n'est pas supérieur à 10 unités ED, et les composants sont présents en les pourcentages indiqués:

chlorure de potassium: d'environ 91 à environ 19%,

maltodextrine: d'environ 1 à environ 40%, et

chlorure de sodium: d'environ 0,1 à environ 75%,

où les pourcentages sont en poids par rapport au poids combiné desdits composants.

9. Composition selon la revendication 8 dans laquelle les composants sont présents en les pourcentages indiqués:

chlorure de potassium: d'environ 91 à environ 20%,

maltodextrine: d'environ 10 à environ 30%, et

chlorure de sodium: d'environ 1 à environ 50%.

10. Composition selon la revendication 9, dans laquelle les composants sont sont présents en les pourcentages indiqués:

chlorure de potassium: d'environ 85 à environ 65%,

maltodextrine: d'environ 15 à environ 20%, et

chlorure de sodium: d'environ 3 à environ 15%.

11. Composition selon la revendication 8 dans laquelle la quantité de chlorure de potassium est d'environ 65%, la quantité de maltodextrine est d'environ 20% et la quantité de chlorure de sodium est d'environ 15%.

12. Composition selon la revendication 8 dans laquelle la quantité de chlorure de potassium est d'environ 72%, la quantité de maltodextrine est d'environ 20% et la quantité de chlorure de sodium est d'environ 8%.

13. Composition selon l'une quelconque des revendications 8 à 12 dans laquelle la granulométrie moyenne des particules de chlorure de potassium est supérieure à la granulométrie moyenne des particules de maltodextrine et à la granulométrie moyenne des particules de chlorure de sodium.

14. Composition selon la revendication 13 dans laquelle:

(a) le chlorure de potassium a une distribution granulométrique telle qu'environ 100% du chlorure de potassium passent à travers un tamis de 40 mesh (425 µm) et environ 67% sont retenus sur un tamis de 100 mesh (150 µm);

(b) la maltodextrine a une distribution granulométrique telle qu'environ 100% de la maltodextrine passent à travers un tamis de 40 mesh (425 µm), environ 97% passent à travers un tamis de 80 mesh (180

μm), et environ 77% passent à travers un tamis de 80 mesh (180 μm) et sont retenus sur un tamis de 325 mesh (45 μm); et

(c) le chlorure de sodium a une distribution granulométrique telle qu'environ 99,9% du chlorure de sodium passant à travers un tamis de 60 mesh (250 μm), environ 99,5% passent à travers un tamis de 80 mesh (180 μm) et environ 82,4% passent à travers un tamis de 80 mesh (180 μm) et son retenus sur un tamis de 200 mesh (75 μm).

15. Composition selon la revendication 1 dans laquelle le mélange uniforme comprend comme ses composants en particules:

(a) du chlorure de potassium,

(b) une maltodextrine,

(c) du chlorure de sodium, et

(d) de la crème de tartre,

dans laquelle l'équivalent en dextrose (ED) de la quantité combinée de chlorure de potassium, de maltodextrine, de chlorure de sodium et de crème de tartre n'est pas supérieur à 10 unités ED et dans laquelle les composants sont présents en les pourcentages indiqués:

chlorure de potassium: d'environ 91 à 19%,

maltodextrine: d'environ 1 à environ 40%,

chlorure de sodium: d'environ 0,1 à environ 75%, et

crème de tartre: d'environ 0,1 à environ 0,9%,

les pourcentages étant en poids par rapport au poids combiné desdits composants.

16. Composition selon la revendication 15 dans laquelle les composants sont présents en les pourcentages indiqués:

chlorure de potassium: d'environ 91 à environ 20%,

maltodextrine: d'environ 10 à environ 30%,

chlorure de sodium: d'environ 1 à environ 50%, et

crème de tartre: d'environ 0,1 à environ 0,7%.

17. Composition, selon la revendication 16 dans laquelle les composants sont présents en les pourcentages indiqués:

chlorure de potassium: d'environ 85 à environ 65%,

maltodextrine: d'environ 15 à environ 20%;

chlorure de sodium: d'environ 3 à environ 15%, et

crème de tartre: d'environ 0,2 à environ 0,5%.

18. Composition, selon la revendication 15 dans laquelle la quantité de chlorure de potassium est d'environ 71,67%, la quantité de maltodextrine est d'environ 20%, la quantité de chlorure de sodium est d'environ 8% et la quantité de crème de tartre est d'environ 0,33%.

19. Composition, selon la revendication 15 dans laquelle la quantité de chlorure de potassium est d'environ 75,67%, la quantité de maltodextrine est d'environ 20%, la quantité de chlorure de sodium est d'environ 4% et la quantité de crème de tartre est d'environ 0,33%.

20. Composition selon l'une quelconque des revendications 15 à 19 dans laquelle la granulométrie moyenne des particules de chlorure de potassium est supérieure à chacune des suivantes: la granulométrie moyenne des particules de maltodextrine, la granulométrie moyenne des particules de chlorure de sodium et la granulométrie moyenne des particules de crème de tartre.

21. Composition, selon la revendication 20 dans laquelle:

(a) le chlorure de potassium a une distribution granulométrique telle qu'environ 100% du chlorure de potassium passent à travers un tamis de 40 mesh (425 μm) et environ 67% sont retenus sur un tamis de 100 mesh (150 μm);

(b) la maltodextrine a une distribution granulométrique telle qu'environ 100% de maltodextrine passent à travers un tamis de 40 mesh (425 μm), environ 97% passent à travers un tamis de 80 mesh (180 μm) et environ 77% passent à travers un tamis de 80 mesh (180 μm) et sont retenus sur un tamis de 325 mesh (45 μm);

(c) le chlorure de sodium a une distribution granulométrique telle qu'environ 99,9% du chlorure de sodium passent à travers un tamis de 60 mesh (250 μm), environ 99,5% passent à travers un tamis de 80 mesh (180 μm) et environ 82,4% passent à travers un tamis de 80 mesh (180 μm) et sont retenus sur un tamis de 200 mesh (75 μm); et

(d) la crème de tartre a une distribution granulométrique telle qu'environ 100% de la crème de tartre passent à travers un tamis de 170 mesh (90 μm), environ 96,7% passent à travers un tamis de 230 mesh (63 μm) et environ 16% passent à travers un tamis de 230 mesh (63 μm) et sont retenus sur un tamis de 400 mesh (38 μm).

22. Composition, selon la revendication 1 dans laquelle le mélange uniforme comprend comme ses composants en particules:

(a) du chlorure de potassium,

(b) une maltodextrine, et

(c) de la crème de tartre

ledit mélange étant dépourvu de chlorure de sodium, l'équivalent en dextrose (ED) de la quantité combinée du chlorure de potassium, de maltodextrine et de crème de tartre n'étant pas supérieur à 10 unités ED et les composants étant présents en les pourcentages indiqués:

chlorure de potassium: d'environ 99 à environ 59%,

maltodextrine: d'environ 1 à environ 40%, et

crème de tartre: d'environ 0,1 à environ 0,9%,

les pourcentages étant en poids par rapport au poids combiné desdits composants.

23. Composition, selon la revendication 22 dans laquelle les composants sont présents en les pourcentages indiqués:

chlorure de potassium: d'environ 91 à environ 69%,

maltodextrine: d'environ 10 à environ 30%, et

crème de tartre: d'environ 0,1 à environ 0,7%.

24. Composition, selon la revendication 23 dans laquelle les composants sont présents en les pourcentages indiqués:

chlorure de potassium: d'environ 85 à environ 79%,

maltodextrine: d'environ 15 à environ 20%, et

crème de tartre: d'environ 0,1 à environ 0,5%.

25. Composition, selon la revendication 24 dans laquelle les composants sont présents en les pourcentages indiqués:

chlorure de potassium: environ 79,6%,

maltodextrine: environ 20%, et

crème de tartre: environ 0,4%.

26. Composition selon l'une quelconque des revendications 22 à 25 dans laquelle la granulométrie moyenne des particules de chlorure de potassium est supérieure à la granulométrie moyenne des particules de maltodextrine et à la granulométrie moyenne des particules de crème de tartre.

27. Composition selon la revendication 26 dans laquelle:

(a) le chlorure de potassium a une distribution granulométrique telle qu'environ 100% chlorure de potassium passent à travers un tamis de 40 mesh (425 μm) et environ 67% sont retenus sur un tamis de 100 mesh (150 μm);

(b) la maltodextrine a une distribution granulométrique telle qu'environ 100% de la maltodextrine passent à travers un tamis de 40 mesh (425 μm), environ 97% passent à travers un tamis de 80 mesh (180 μm) et environ 77% passent à travers un tamis de 80 mesh (180 μm) et sont retenus sur un tamis de 325 mesh (45 μm); et

(c) la crème de tartre a une distribution granulométrique telle qu'environ 100% de la crème de tartre passent à travers un tamis de 170 mesh (90 μm), environ 96,7% passent à travers un tamis de 230 mesh (63 μm) et environ 16 passent à travers un tamis de 230 mesh (63 μm) et sont retenus sur un tamis de 400 mesh (38 μm).

28. Composition selon l'une quelconque des revendications 1 à 27 dans laquelle ledit mélange est homogène.

29. Composition selon l'une quelconque des revendications 1 à 28 dans laquelle ladite maltodextrine a un ED dans la gamme d'environ 5 à environ 25 unités ED.

30. Composition selon la revendication 29 dans laquelle ladite maltodextrine a un ED dans la gamme d'environ 5 à environ 15 unités ED.

31. Composition selon la revendication 30 dans laquelle ladite maltodextrine a un ED dans la gamme d'environ 9 à environ 12 unités ED.

32. Composition selon l'une quelconque des revendications 1 à 31 dans laquelle ladite maltodextrine est une maltodextrine soluble dans l'eau comprenant au moins comme portion majeure un ou plusieurs polysaccharides ayant un degré de polymérisation (DP) d'au moins 10.

33. Composition selon l'une quelconque des revendications 1 à 32 dans laquelle ladite maltodextrine est un hydrolysat d'amidon.

34. Composition selon l'une quelconque des revendications 1 à 33 dans laquelle ladite maltodextrine a la teneur suivante en saccharides comme déterminé par chromatographie liquide haute performance:

| Saccharides—par degré de polymérisation | Quantité | |
|---|---|---|
| | d'environ % | A environ % |
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,9 |
| DP (supérieur à 10) | 57 | 68 |

35. Composition selon la revendication 34 dans laquelle ladite teneur en saccharides est la suivante:

| Saccharides—par degré de polymérisation | Quantité (%) |
|---|---|
| DP1 | environ 0,5 |
| DP2 | environ 2,7 |
| DP3 | environ 4,3 |
| DP4 | environ 3,7 |
| DP5 | environ 3,1 |
| DP6 | environ 5,0 |
| DP7 | environ 7,1 |
| DP8 | environ 4,5 |
| DP9 | environ 3,1 |
| DP10 | environ 1,6 |
| DP (supérieur à 10) | environ 64 |

36. Procédé pour préparer une composition de substitution de sel selon l'une quelconque des revendications 1 à 35, ledit procédé comprenant le mélange uniforme de chlorure de sodium et de maltodextrine et facultativement de chlorure de sodium et/ou de crème de tartre, les quantités mélangées étant telles que l'équivalent en dextrose (ED) du mélange ne soit pas supérieur à 10 unités ED.


**Revendications Pour l'Etat Contactant: AT**

1. Procédé de fabrication d'une composition d'un substitut du sel caractérisé en ce qu'il consiste à former un mélange des composants suivants en particules:
    (a) du chlorure de potassium, et
    (b) une maltodextrine,
où l'équivalent en dextrose (ED) du mélange d'est pas supérieur à 10 unités ED.

**0 130 822**

2. Procédé selon la revendication 1, caractérisé en ce qu'il consiste à réaliser un mélange uniforme comprenant essentiellement comme ses composants en particules:

(a) du chlorure de potassium, et

(b) une maltodextrine,

dans laquelle l'équivalent en dextrose (ED) de la quantité combinée de chlorure de potassium et de maltodextrine n'est par supérieur à 10 unités ED et les composants sont présents les pourcentages indiqués:

Chlorure de potassium: d'environ 99 à environ 60%, et

Maltodextrine: d'environ 1 à environ 40%,

les pourcentages étant en poids par rapport au poids combiné desdits composants.

3. Procédé, selon la revendication 2, caractérisé en ce qu'il consiste à prévoir les composants dans les pourcentages indiqués: chlorure de potassium: d'environ 90 à environ 70% et maltodextrine: d'environ 10 à environ 30%.

4. Procédé, selon la revendication 3, caractérisé en ce qu'il consiste à utiliser les composants dans les pourcentages indiqués:

chlorure de potassium: d'environ 85 à environ 80% et

maltodextrine: d'environ 15 à environ 20%.

5. Procédé selon la revendication 4, caractérisé en ce qu'il consiste à prévoir les composants dans les pourcentages indiqués:

chlorure de potassium: environ 80% et

maltodextrine: environ 20%.

6. Procédé selon l'une quelconque des revendications 2 à 5, caractérisé en ce qu'il consiste à prévoir une granulométrie moyenne des particules de chlorure de potassium supérieure à la granulométrie moyenne des particules de maltodextrine.

7. Procédé, selon la revendication 6, caractérisé en ce que:

(a) le chlorure de potassium a une distribution granulométrique telle qu'environ 100% du chlorure de potassium passent à travers un tamis de 40 mesh (425 µm) et environ 67% sont retenus sur un tamis de 100 mesh (150 µm), et

(b) la maltodextrine a une distribution granulométrique telle qu'environ 100% de la maltodextrine passent à travers un tamis de 40 mesh (425 µm), environ 97% passent à travers un tamis de 80 mesh (180 µm) et environ 77% passent à travers un tamis de 80 mesh (180 µm) et sont retenus sur un tamis de 325 mesh (45 µm).

8. Procédé, selon la revendication 1, caractérisé en ce que le mélange uniforme comprend comme ses composants en. particules:

(a) du chlorure de potassium,

(b) une maltodextrine, et

(c) du chlorure de sodium,

dans laquelle l'équivalent en dextrose (ED) de la quantité combinée de chlorure de potassium, de maltodextrine et de chlorure de sodium n'est pas supérieur à 10 unités ED, et les composants sont présents en les pourcentages indiqués:

chlorure de potassium: d'environ 91 à environ 19%,

maltodextrine: d'environ 1 à environ 40%, et

chlorure de sodium: d'environ 0,1 à environ 75%,

où les pourcentages sont en poids par rapport au poids combiné desdits composants.

9. Procédé, selon la revendication 8, caractérisé en ce que les composants sont présents en les pourcentages indiqués:

chlorure de potassium: d'environ 91 à environ 20%,

maltodextrine: d'environ 10 à environ 30%, et

chlorure de sodium: d'environ 1 à environ 50%.

10. Procédé, selon la revendication 9, caractérisé en ce que les composants sont présents en les pourcentages indiqués:

chlorure de potassium: d'environ 85 à environ 65%,

maltodextrine: d'environ 15 à environ 20%, et

chlorure de sodium: d'environ 3 à environ 15%.

11. Procédé, selon la revendication 8, caractérisé en ce que la quantité de chlorure de potassium est d'environ 65%, la quantité de maltodextrine est d'environ 20% et la quantité de chlorure de sodium est d'environ 15%.

12. Procédé, selon la revendication 8, caractérisé en ce que la quantité de chlorure de potassium est d'environ 72%, la quantité de maltodextrine est d'environ 20% et la quantité de chlorure de sodium est d'environ 8%.

13. Procédé, selon l'une quelconque des revendications 8 à 12, caractérisé en ce que la granulométrie moyenne des particules de chlorure de potassium est supérieure à la granulométrie moyenne des particules de maltodextrine et à la granulométrie moyenne des particules de chlorure de sodium.

14. Procédé, selon la revendication 13, caractérisé en ce que:

(a) le chlorure de potassium a une distribution granulométrique telle qu'environ 100% du chlorure de

34

potassium passent à travers un tamis de 40 mesh (425 μm) et environ 67% sont retenus sur un tamis de 100 mesh (150 μm);

(b) la maltodextrine a une distribution granulométrique telle qu'environ 100% de la maltodextrine passent à travers un tamis de 40 mesh (425 μm), environ 97% passent à travers un tamis de 80 mesh (180 μm) et environ 77% passent à travers un tamis de 80 mesh (180 μm) et sont retenus sur un tamis de 325 mesh (45 μm); et

(c) le chlorure de sodium a une distribution granulométrique telle qu'environ 99,9% du chlorure de sodium passent à travers un tamis de 60 mesh (250 μm), environ 99,5% passent à travers un tamis de 80 mesh (180 μm) et environ 82,4% passent à travers un tamis de 80 mesh (180 μm) et son retenus sur un tamis de 200 mesh (75 μm).

15. Procédé selon la revendication 1, caractérisé en ce que le mélange uniforme comprend comme ses composants en particules:

(a) du chlorure de potassium,

(b) une maltodextrine,

(c) du chlorure de sodium, et

(d) de la crème de tartre,

dans laquelle l'équivalent en dextrose (ED) de la quantité combinée de chlorure de potassium, de maltodextrine, de chlorure de sodium et de crème de tartre n'est pas supérieur à 10 unités ED et dans laquelle les composants sont présents en les pourcentages indiqués:

chlorure de potassium: d'environ 91 à 19%,

maltodextrine: d'environ 1 à environ 40%,

chlorure de sodium: d'environ 0,1 à environ 75%, et

crème de tartre, d'environ 0,1 à environ 0,9%,

les pourcentages étant en poids par rapport au poids combiné desdits composants.

16. Procédé, selon la revendication 15, caractérisé en ce que les composants sont présents en les pourcentages indiqués:

chlorure de potassium: d'environ 91 à environ 20%,

maltodextrine: d'environ 10 à environ 30%,

chlorure de sodium: d'environ 1 à environ 50%, et

crème de tartre: d'environ 0,1 à environ 0,7%.

17. Procédé selon la revendication 16, caractérisé en ce que les composants sont présents en les pourcentages indiqués:

chlorure de potassium: d'environ 85 à environ 65%,

maltodextrine: d'environ 15 à environ 20%,

chlorure de sodium: d'environ 3 à environ 15%, et

crème de tartre: d'environ 0,2 à environ 0,5%.

18. Procédé selon la revendication 15, caractérisé en ce que la quantité de chlorure de potassium est d'environ 71,67%, la quantité de maltodextrine est d'environ 20%, la quantité de chlorure de sodium est d'environ 8% et la quantité de crème de tartre est d'environ 0,33%.

19. Procédé, selon la revendication 15, caractérisé en ce que la quantité de chlorure de potassium est d'environ 75,67%, la quantité de maltodextrine est d'environ 20%, la quantité de chlorure de sodium est d'environ 4% et la quantité de crème de tartre est d'environ 0,33%.

20. Procédé, selon l'une quelconque des revendications 15 à 19, caractérisé en ce que la granulométrie moyenne des particules de chlorure de potassium est supérieure à chacune des suivantes: la granulométrie moyenne des particules de maltodextrine, la granulométrie moyenne des particules de chlorure de sodium et la granulométrie moyenne des particules de crème de tartre.

21. Procédé, selon la revendication 20, caractérisé en ce que:

(a) la chlorure de potassium a une distribution granulométrique telle qu'environ 100% du chlorure de potassium passent à travers un tamis de 40 mesh (425 μm) et environ 67% sont retenus sur un tamis de 100 mesh (150 μm);

(b) la maltodextrine a une distribution granulométrique telle qu'environ 100% de maltodextrine passent à travers un tamis de 40 mesh (425 μm), environ 97% passent à travers un tamis de 80 mesh (180 μm) et environ 77% passent à travers un tamis de 80 mesh (180 μm) et sont retenus sur un tamis de 325 mesh (45 μm);

(c) le chlorure de sodium a une distribution granulométrique telle qu'environ 99,9% du chlorure de sodium passent à travers un tamis de 60 mesh (250 μm), environ 99,5% passent à travers un tamis de 80 mesh (180 μm) et environ 82,4% passent à travers un tamis de 80 mesh (180 μm) et sont retenus sur un tamis de 200 mesh (75 μm); et

(d) la crème de tartre a une distribution granulométrique telle qu'environ 100% de la crème de tartre passent à travers un tamis de 170 mesh (90 μm), environ 96,7% passent à travers un tamis de 230 mesh (63 μm) et environ 16% passent à travers un tamis de 230 mesh (63 μm) et sont retenus sur un tamis de 400 mesh (38 μm).

22. Procédé, selon la revendication 1, caractérisé en ce que le mélange uniforme comprend comme ses composants en particules:

(a) du chlorure de potassium,

**0 130 822**

(b) une maltodextrine, et

(c) de la crème de tartre

ledit mélange étant dépourvu de chlorure de sodium, l'équivalent en dextrose (ED) de la quantité combinée du chlorure de potassium, de maltodextrine et de crème de tartre n'étant pas supérieur à 10 unités ED et les composants étant présents en les pourcentages indiqués:

chlorure de potassium: d'environ 99 à environ 59%,

maltodextrine: d'environ 1 à environ 40%, et

crème de tartre: d'environ 0,1 à environ 0,9%,

les pourcentages étant en poids par rapport au poids combiné desdits composants.

23. Procédé selon la revendication 22, caractérisé en ce que les composants sont présents en les pourcentages indiqués:

chlorure de potassium: d'environ 91 à environ 69%,

maltodextrine: d'environ 10 à environ 30%, et

crème de tartre: d'environ 0,1 à environ 0,7%.

24. Procédé, selon la revendication 23, caractérisé en ce que les composants sont présents en les pourcentages indiqués:

chlorure de potassium: d'environ 85 à environ 79%,

maltodextrine: d'environ 15 à environ 20%, et

crème de tartre: d'environ 0,1 à environ 0,5%.

25. Procédé, selon la revendication 24, caractérisé en ce que les composants sont présents en les pourcentages indiqués:

chlorure de potassium: environ 79,6%,

maltodextrine: environ 20%, et

crème de tartre: environ 0,4%.

26. Procédé selon l'une quelconque des revendications 22 à 25, caractérisé en ce que la granulométrie moyenne des particules de chlorure de potassium est supérieure à la granulométrie moyenne des particules de maltodextrine et à la granulométrie moyenne des particules de crème de tartre.

27. Procédé, selon la revendication 26, caractérisé en ce que:

(a) le chlorure de potassium a une distribution granulométrique telle qu'environ 100% du chlorure de potassium passent à travers un tamis de 40 mesh (425 µm) et environ 67% sont retenus sur un tamis de 100 mesh (150 µm);

(b) la maltodextrine a une distribution granulométrique telle qu'environ 100% de la maltodextrine passent à travers un tamis de 40 mesh (425 µm), environ 97% passent à travers un tamis de 80 mesh (180 µm) et environ 77% passent à travers un tamis de 80 mesh (180 µm) et sont retenus sur un tamis de 325 mesh (45 µm); et

(c) la crème de tartre a une distribution granulométrique telle qu'environ 100% de la crème de tartre passent à travers un tamis de 170 mesh (90 µm) environ 96,7% passent à travers un tamis de 230 mesh (63 µm) et environ 16% passent à travers un tamis de 230 mesh (63 µm) et sont retenus sur un tamis de 400 mesh (38 µm).

28. Procédé selon l'une quelconque des revendications 1 à 27, caractérisé en ce que les composants en particules sont malaxés pour que ledit mélange soit homogène.

29. Procédé, selon l'une quelconque des revendications 1 à 28, caractérisé en ce que ladite maltodextrine a un ED dans la gamme d'environ 5 à environ 25 unités ED.

30. Procédé, selon la revendication 29, caractérisé en ce que ladite maltodextrine a un ED dans la gamme d'environ 5 à environ 15 unités ED.

31. Procédé, selon la revendication 30, caractérisé en ce que ladite maltodextrine a un ED dans la gamme d'environ 9 à environ 12 unités ED.

32. Procédé, selon l'une quelconque des revendications 1 à 31, caractérisé en ce que ladite maltodextrine est une maltodextrine soluble dans l'eau comprenant au moins comme portion majeure un ou plusieurs polysaccharides ayant un degré de polymérisation (DP) d'au moins 10.

33. Procédé, selon l'une quelconque des revendications 1 à 32, caractérisé en ce que ladite maltodextrine est un hydrolysat d'amidon.

34. Procédé, selon l'une quelconque des revendications 1 à 33, caractérisé en ce que ladite maltodextrine a la teneur suivante en saccharides comme déterminé par chromatographie liquide haute performance:

| Saccharides—par degré de polymérisation | Quantité d'environ % | À environ % |
|---|---|---|
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,9 |
| DP (supérieur à 10) | 57 | 68 |

35. Procédé, selon la revendication 34, caractérisé en ce que ladite teneur en saccharides est la suivante:

| Saccharides—par degré de polymérisation | Quantité (%) |
|---|---|
| DP1 | environ 0,5 |
| DP2 | environ 2,7 |
| DP3 | environ 4,3 |
| DP4 | environ 3,7 |
| DP5 | environ 3,1 |
| DP6 | environ 5,0 |
| DP7 | environ 7,1 |
| DP8 | environ 4,5 |
| DP9 | environ 3,1 |
| DP10 | environ 1,6 |
| DP (supérieur à 10) | environ 64 |